# EUROPÄISCHE PATENTANMELDUNG

(11) **EP 3 654 590 A1**
(43) Veröffentlichungstag der Anmeldung: **20.05.2020**
(21) Anmeldenummer: 18205927.9
(22) Anmeldetag: 13.11.2018
(51) Int. Cl.: H04L 12/46, H04L 12/40

(54) **VERFAHREN ZUR DATENKOMMUNIKATION, VORRICHTUNG, COMPUTERPROGRAMM UND COMPUTERLESBARES MEDIUM**

(71) Anmelder: Siemens Aktiengesellschaft, 80333 München (DE)
(72) Erfinder: Götz, Franz-Josef, 91180 Heideck (DE); Kießling, Marcel, 91235 Velden (DE); Schmitt, Jürgen, 90766 Fürth (DE)

(57) **Zusammenfassung**

Die Erfindung betrifft ein Verfahren zur Datenkommunikation in einem strukturierten Netzwerk, welches wenigstens ein Betreibernetzwerk (1, 2, 3) und ein einen oder mehrere Kernknoten (6) umfassendes Transportnetzwerk (5), welches das Betreibernetzwerk (1, 2, 3) mit wenigstens einem weiteren Betreibernetzwerk (1, 2, 3) und/oder mit wenigstens einem einzelnen, einen Sender und/oder Empfänger darstellenden Netzwerkteilnehmer verbindet, wobei das oder jedes Betreibernetzwerk (1, 2, 3) und der oder jeder einzelne Netzwerkteilnehmer über einen Randknoten (7) mit dem Transportnetzwerk (5) verbunden ist, wobei in dem Transportnetzwerk (5) ein sich zwischen zwei oder mehr Randknoten (7) erstreckender Stream-Tunnel (8, 9) eingerichtet ist oder wird, und zwischen über das Transportnetzwerk (5) verbundenen Netzwerkteilnehmern Datenframes via Stream (SR A - SR F) übertragen werden, wobei durch den Stream-Tunnel (8, 9) Stream-Datenframes (10) weitergeleitet werden, die verschiedenen Streams (SR A - SR F) zugeordnet sind, wobei die Weiterleitung unter Nutzung von Netzwerkressourcen erfolgt, die an einem oder mehreren Kernknoten (6) des Transportnetzwerkes (5) für den Stream-Tunnel (8, 9) reserviert sind oder werden. Darüber hinaus betrifft die Erfindung eine Vorrichtung, ein Computerprogramm und ein computerlesbares Medium.

## Beschreibung

Die Erfindung betrifft ein Verfahren zur Datenkommunikation in einem strukturierten Netzwerk, welches wenigstens ein insbesondere industrielles Betreibernetzwerk, an das mehrere Sender und/oder Empfänger darstellende Netzwerkteilnehmer angeschlossen sind, und ein einen oder mehrere Kernknoten umfassendes Transportnetzwerk, welches das Betreibernetzwerk mit wenigstens einem weiteren insbesondere industriellen Betreibernetzwerk, an das mehrere Sender und/oder Empfänger darstellende weitere Netzwerkteilnehmer angeschlossen sind, und/oder mit wenigstens einem einzelnen, einen Sender und/oder Empfänger darstellenden Netzwerkteilnehmer verbindet, wobei das oder jedes Betreibernetzwerk und der oder jeder einzelne Netzwerkteilnehmer über einen Randknoten mit dem Transportnetzwerk verbunden ist. Darüber hinaus betrifft die Erfindung eine Vorrichtung, ein Computerprogramm und ein computerlesbares Medium.

Verteilte industrielle Steueranwendungen erfordern eine bestimmte Dienstgüte (englisch: Quality of Service - QoS) von dem Kommunikationsnetzwerk, welches die Endstationen verbindet, damit zeitsensitive Aufgaben neben nicht-echtzeitfähigem Verkehr auf dem gleichen Netzwerk durchgeführt werden können. Bei den Endstationen kann es sich beispielsweise um speicherprogrammierbare Steuerungen (abgekürzt SPS, oder englisch: Pogrammable Logic Controller, abgekürzt PLC) um Eingabe- und Ausgabegeräte, die auch als IO-Geräte bezeichnet werden, Schutzgeräte oder andere Geräte handeln.

Jede Anwendung im Netzwerk, welche zeitsensitiven Verkehr zwischen Endstationen umfasst, muss registriert und reserviert werden, um Garantien vom Netzwerk für verlustfreien Echtzeit-Rahmen-Transfer (englisch: real-time frame transfer) und pünktliche Lieferung zu erhalten. Das Netzwerk muss die Verfügbarkeit von Netzwerkressourcen verifizieren und, sofern verfügbar, dedizierte Netzwerkressourcen, wie zum Beispiel Adresstabelleneinträge, Framebuffer, Sendezeitintervalle (englisch: transmit time slices) und/oder Bandbreite für jeden Echtzeitfluss zuweisen und Zugriff für den Echtzeitverkehr gewähren.

Innerhalb des Netzwerkes muss Kontrollinformation über Registrierungen, Reservierungen und Weiterleite-Informationen für jeden Echtzeitfluss gespeichert werden. Mit einer steigenden Anzahl von Endgeräten und ihren Echtzeitflüssen im gleichen Netzwerk wächst die Menge an Kontrollinformation. Da der Speicher und die Prozessorleistung von Netzwerkknoten, die in Form von Bridges vorliegen können, limitiert ist, stellt dies ein erhebliches Skalierungsproblem dar. Dies gilt insbesondere, wenn Netzwerkkonten und Endgeräte in einem einzelnen Produkt vereint sind, beispielsweise in einem IO-Modul mit zwei geswitchten externen Ports zur Verwendung in Linien- bzw. Ringtopologien, wie es heutzutage üblicherweise in Ethernet Fabrikhallen Lösungen vorgefunden werden kann.

Die IEEE802.1 TSN Arbeitsgruppe definiert Erweiterungen zum Ethernet Standard IEEE802.1/.3 für ein konvergierendes zeitsensitives Netzwerk (TSN). Basierend auf der vorangegangenen Arbeit der Audio Video Bridging (AVB) Arbeitsgruppe, ist die Quality of Service (QoS) für Echtzeitflüsse (die in IEEE802 "Stream" genannt werden) weiterhin verbessert worden, was eine garantierte Latenz angeht. Zu den Erweiterungen gehören beispielsweise Zeitsynchronisation (IEEE 802.1AS-Rev), Frame Preemption (IEEE 802.1Qbu) und Reservierung (IEEE 802.1Qca, IEEE 802.1Qcc) sowie weitere.

"Multiple Listeners per Talker" wurde durch AVB eingeführt, um die Anzahl von Echtzeitflüssen von einer Quelle, also einem Sender (Talker) zu mehreren Zielen, also mehreren Empfängern (Listenern) auf einen einzigen Echtzeitfluss zu reduzieren.

Die auf die Anmelderin zurückgehende europäische Patentanmeldung der Nr. EP 18 15 4319 beschreibt einen Mechanismus, der für ein Szenario mit mehreren Talkern und einem Listener die Anzahl von Echtzeitflüssen auf einen einzigen Echtzeitfluss, also Stream, reduziert.

In der industriellen Automatisierung können diese beiden Mechanismen verwendet werden, um die Anzahl von Echtzeitflüssen im Netzwerk zu reduzieren. Insbesondere im Bereich der industriellen Automatisierung kommt sowohl das Szenario mit genau einem Sender und mehreren Empfängern als auch das Szenario mit mehreren Sendern und genau einem Empfänger vielfach vor, denn in der Regel sind Messwerte von einer Mehrzahl verteilter Sensoren an eine SPS in Echtzeit zu übermitteln, die unter Berücksichtigung dieser Stellwerte für verteilte Aktoren ermittelt, die wiederrum von den Aktoren in Echtzeit benötigt werden und an diese übermittelt werden müssen.

Virtualisierung ermöglicht die Verwendung von günstigerer IT-Technologie in einer geschützten Umgebung, etwa, um die Funktionalität einer speicherprogrammierbaren Steuerung als Service bereitzustellen. Ein zentralisierter Service in einem Data-Center oder auf einem leistungsfähigen Server benötigt ein leistungsfähiges Netzwerk. In industriellen Anwendungen ist jegliche erforderliche Endgeräteinformation zu dem SPS-Service zu transportieren. Daten müssen von den lokalen Sensoren im Maschinennetzwerk zu der SPS-Dienst-Instanz, insbesondere in einem Datacenter in einer geschützten Umgebung, und umgekehrt, transportiert werden. Aufgrund der zeitsensitiven Natur der Echtzeit-Steuerung müssen die Daten unter Verwendung von Echtzeitflüssen zu dem momentanen Ort des SPS-Services transferiert werden. Die Virtualisierung bringt den Vorteil des Handlings einer Mehrzahl von Instanzen eines Services an einem Ort mit der gleichen Hardware. Im Falle von SPS-Diensten wird dies nach Erwartung der Anmelderin jedoch zu einer riesigen Anzahl von Echtzeitflüssen führen, auch wenn mit "Multiple Listeners per Talker" und dem Mechanismus gemäß der Anmelde Nr. EP 18154319.0 die Anzahl Echtzeitflüsse bereits reduziert werden kann.

Ein zentralisierter Ansatz, welcher durch Virtualisierung zur Kostenreduktion unterstützt wird, führt somit zu einem Engpass im Netzwerk.

Moderne IT-Netzwerke sind hierarchisch in Segmente geschichtet, um solche Skalierungsprobleme zu überwinden. Dabei stellt ein Transportnetzwerk, das auch als Kernnetzwerk bezeichnet wird, eine Verbindung zwischen mehreren weiteren Netzwerken her. Einkapselungstechnologien wie Q-in-Q (zusätzliche VLAN Tags) oder Mac-in-Mac (zusätzliche MAC-Header) sind heutzutage in Ethernet definiert. Netzwerkkonten in dem Transportsegment müssen dabei nur den äußeren Header betrachten. Randknoten (auch als Edge-Bridges bezeichnet) führen die erforderliche Einkapselung durch, indem sie die Tunneladresse, etwa in Form eines Tags, hinzufügen und dadurch die Kunden-Netzwerkinformation vor dem Transportnetzwerk verstecken, um ein vereinfachtes Kernnetzwerk (englisch: Core Network) zu ermöglichen. Nur die Edge-Bridges müssen die Zuordnung vom inneren zum äußeren Tag kennen.

Ein Skalierungsproblem existiert auch in dem Bereich der Provider- und der Provider-Backbone-Umgebung. Viele "Kundennetzwerke" müssen über ein "Transportnetzwerk" verbunden werden. Die Transportnetzwerke müssen daher geeignet sein, mit einer sehr hohen Anzahl von Verbindungen (mehrere Tausend oder mehr) zwischen Geräten in unterschiedlichen Kundennetzwerken umzugehen. Die Basismechanismen von Ethernet sind daher durch die genannten Einkapselungsmechanismen (Q-in-Q sowie Mac-in-Mac) erweitert worden, um die Verbindungsdetails für die Kernnetzwerke zu abstrahieren und ressourceneffiziente Weiterleite-Mechanismen in den Kernnetzwerken zu ermöglichen. Dabei sind mehrere Einkapselungslevel möglich.

Die Quality of Service Mechanismen, die durch TSN eingeführt wurden, sind derzeit auf Kundennetzwerke limitiert. Ein hierarchischer Schichtaufbau bzw. eine Strukturierung des Netzwerkes werden nicht unterstützt. Vielmehr erfordern die zugrundeliegenden Mechanismen zur Unterstützung von Echtzeitflüssen die Handhabung individueller Streams. Skalierungsmechanismen sind nicht vorgesehen.

Ausgehend davon besteht eine Aufgabe der vorliegenden Erfindung darin, eine Möglichkeit zu schaffen, dass die Vorteile von TSN mit vertretbarem Aufwand auch in demjenigen Fall genutzt werden können, dass eine sehr hohe Anzahl von eine Echtzeit-Übertragung gewährleistenden Verbindungen in großen, strukturierten Netzwerken einzurichten ist.

Diese Aufgabe wird bei einem Verfahren der eingangs genannten Art dadurch gelöst, dass in dem Transportnetzwerk ein sich zwischen zwei oder mehr Randknoten erstreckender Stream-Tunnel eingerichtet ist oder wird, und zwischen über das Transportnetzwerk verbundenen Netzwerkteilnehmern Datenframes via Stream übertragen werden, wobei durch den Stream-Tunnel Stream-Datenframes weitergeleitet werden, die verschiedenen Streams zugeordnet sind, wobei die Weiterleitung unter Nutzung von Netzwerkressourcen erfolgt, die an einem oder mehreren Kernknoten des Transportnetzwerkes für den Stream-Tunnel reserviert sind oder werden.

Der vorliegenden Erfindung liegt mit andern Worten die Idee zu Grunde in einem strukturierten Netzwerk mehrere Echtzeitflüsse, also Streams, die sich durch das gleiche gewünschte Verhalten auszeichnen, sich insbesondere durch den gleichen Weiterleite-Pfad auszeichnen und/oder der gleichen Forwarding Equivalence Class (FEC) angehören, in dem von allen genutzten Transportnetzwerk, welches insbesondere den Kern des Gesamt-Netzwerkes bildet, in einer vorliegend als "Tunnel" bezeichneten Verbindung zu kombinieren.

Dabei werden gemäß der vorliegenden Erfindung die Stream-Datenframes verschiedener Streams unter Nutzung von Netzwerkressourcen weitergeleitet, die an einem oder mehreren Kernknoten des Transportnetzwerkes für den Stream-Tunnel und nicht die einzelnen Streams reserviert sind bzw. werden.

Insbesondere werden mehrere Echtzeitflüsse, also Streams, in Betreibernetzwerken in dem Transportnetzwerk mit derselben Frame-Information (bevorzugt derselben designierten Adresse) weitergeleitet.

Der Stream-Tunnel stellt praktisch seinerseits eine geschützte Verbindung dar, für die im Transportnetzwerk, konkret an beteiligten Kernknoten, Ressourcen reserviert sind bzw. werden. Diese wird erfindungsgemäß für die bandbreitengeschützte Übertragung von Datenframes mehrerer einzelner, aus Betreibernetzwerken bzw. von einzelnen Betreiber-Netzwerkteilnehmern stammender Streams genutzt.

Ein aus einem Betreibernetzwerk bzw. von einem einzelnen Betreiber-Netzwerkteilnehmer stammender Stream kann insbesondere über eine in den Datenframes enthaltene Stream ID und/oder VLAN-Angabe, insbesondere ein VLAN-Tag, eindeutig identifizierbar sein. Dass über einen Stream-Tunnel verschiedenen, einzelnen Streams zugeordnete Datenframes weitergeleitet werden, bedeutet insbesondere, dass Stream-Datenframes mit unterschiedlichen Stream-IDs und/oder VLAN-Tags gemeinsam durch einen Stream-Tunnel weitergeleitet werden.

Da im Transportnetzwerk erfindungsgemäß eine Zusammenfassung einer Mehrzahl einzelner Streams in einen Stream-Tunnel vorgesehen ist, kann die Gesamtanzahl von Echtzeitflüssen, die im Transportnetzwerk sichtbar sind, deutlich reduziert werden. Insbesondere kann der Kontroll-Overhead für die Registrierung und Reservierung von Echtzeitflüssen im Transportnetzwerk und die Anzahl von Filtering-Data-Base-Einträgen in Kernknoten des Transportnetzwerkes reduziert werden. Anstatt dass zum Beispiel für zwei, drei, vier oder mehr verschiedene Streams, jeweils mit unterschiedlichen Stream-IDs und Stream-Adressen, Einträge in den Kernknoten gespeichert werden müssen, ist dies nur einmal für den gemeinsam verwendeten Stream-Tunnel erforderlich.

Während in dem Transportnetzwerk erfindungsgemäß eine Bündelung in einem oder mehreren Stream-Tunneln erfolgt, findet in dem oder den Betreibernetzwerken hingegen weiterhin eine Reservierung in vorbekannter Weise für individuelle Streams statt.

Bei Netzwerkressourcen, die im Transportnetzwerk erfindungsgemäß für einen oder mehrere Stream-Tunnel reserviert werden, handelt es sich insbesondere um diejenigen Ressourcen, die gemäß dem Stand der Technik im Rahmen der Einzel-Stream-Reservierung reserviert werden. Es kann sich beispielsweise um Adresstabelleneinträge, Framebuffer, Sendezeitintervalle (englisch: transmit time slices) und/oder Bandbreite handeln. Eine Reservierung von Netzwerkressourcen erfolgt zweckmäßiger Weise - ebenfalls in Analogie zu dem Einzel-Streams betreffenden Stand der Technik - an allen beteiligten Kernknoten im Transportnetzwerk.

Durch die erfindungsgemäße Vorgehensweise kann die Skalierbarkeit erhöht und ein Support von mehre Endgeräten, beispielsweise Sensoren und/oder Aktoren in einem industriellen Netzwerk, ermöglicht werden. Da der Kontroll-Overhead für die Registrierung und Reservierung sowie die Anzahl von Filtering-Data-Base-Einträgen in den Kernnoten des Transportnetzwerkes reduziert wird, kann insgesamt eine höhere Anzahl von Echtzeitdatenflüssen unterstützt werden. So kann die Virtualisierung zum Beispiel von Steuerungsfunktionen für eine industrielle Anlage an einem entfernten Ort, etwa einem Data-Center, problemlos erfolgen. Echtzeit-Datenverkehr kann in Kombination mit strukturierten Netzwerken zum Einsatz kommen. So wird es möglich, auch für zeitsensitive Anwendungen ein vereinfachtes Transportnetzwerk, also einen vereinfachten Netzwerk-Kern, zu nutzen. Auch wird ein besonders Ressourceneffizientes Handling/Management insbesondere der Kontrollinformationen möglich.

Selbstverständlich können in einem Transportnetzwerk mehrere Stream-Tunnel eingerichtet sein und oder werden, die dann jeweils von mehreren einzelnen Streams genutzt werden (können). Eine Ausführungsform des erfindungsgemäßen Verfahren zeichnet sich entsprechend dadurch aus, dass in dem Transportnetzwerk zwei oder mehr sich jeweils zwischen zwei oder mehr Randknoten erstreckende Stream-Tunnel eingerichtet sind oder werden, wobei für jeden Stream-Tunnel gilt, dass über diesen verschiedenen Streams zugeordnete Stream-Datenframes weitergeleitet werden, wobei die Weiterleitung unter Nutzung von Netzwerkressourcen erfolgt, die an einem oder mehreren Kernknoten des Transportnetzwerkes für den jeweiligen Stream-Tunnel - und nicht die einzelnen, dem jeweiligen Stream-Tunnel zugeordneten Streams - reserviert sind oder werden.

Bei dem strukturierten Netzwerk handelt es sich bevorzugt um ein AVB- oder TSN-Netzwerk, also ein solches, welches die Einrichtung von Streams, das heißt geschützten Verbindungen bzw. Echtzeit-Flüssen mit gesicherten, reservierten Ressourcen und insbesondere definierten Latenz, unterstützt. Unter Streams sind insbesondere solche im Sinne von IEEE802 zu verstehen.

Bei dem oder den Betreibernetzwerken kann es sich um beliebige Arten von Netzwerken handeln. Ein Betreibernetzwerk im Sinne der vorliegenden Anmeldung zeichnet sich insbesondere dadurch aus, dass wenigstens ein Endgerät an dieses angeschlossen ist, welches Daten nicht nur weiterleitet sondern eine Datenquelle und/oder Datensenke darstellt. Unter einem Transportnetzwerk ist insbesondere ein solches zu verstehen, welches nur der Datenweiterleitung dient und an welches insbesondere keine Endgeräte angeschlossen sind.

Bei einem Betreibernetzwerk kann es sich zum Beispiel um ein Firmen-internes Netzwerk handeln, welches über ein Transportnetzwerk mit einem anderen, ebenfalls ein Betreibernetzwerk darstellenden Firmen-internen Netzwerk verbunden ist. Auch kann es sich bei einem Betreibernetzwerk um ein solches des Betreibers einer industriellen Anlage handeln, an das Feldgeräte angeschlossen sind. In einem solchen Fall kann das Betreibernetzwerk beispielsweise über ein Transportnetzwerk mit einem oder mehreren an einem entfernt liegenden Rechenzentrum ausgeführten Diensten, etwa SPS-Diensten, verbunden sein, insbesondere SPS-Diensten in der Cloud. Über das Transportnetzwerk können dann Sensor- und/oder Steuerdaten zwischen am Betreibernetzwerk anliegenden Feldgeräten und dem oder den Services im Rechenzentrum ausgetauscht werden. Das Transportnetzwerk bildet den "Netzwerk-Kern". Es leitet Daten nur weiter, es sind keine Sender/Talker oder Empfänger/Listener Teilnehmer des Transportnetzwerkes. Bevorzugt wird eine Verbindung in dem Transportnetzwerl von allen Endgeräten in Betreibernetzwerken geteilt.

Netzwerkteilnehmer können beispielsweise in Form von Geräten, etwa Endgeräten vorliegen. Auch ist es auch möglich, dass ein Netzwerkteilnehmer in Form einer Anwendung bzw. eines Dienstes vorliegt.

Bevorzugt ist dem Stream-Tunnel bzw. im Falle mehrerer Stream-Tunnel jedem Stream-Tunnel eine Tunnel-ID (also Tunnel-Kennung) und/oder Tunnel-Adresse und/oder Tunnel-VLAN zugeordnet. Für die Weiterleitung von verschiedenen Streams zugeordneten Stream-Datenframes über den jeweiligen Stream-Tunnel werden bevorzugt Netzwerkressourcen genutzt, die für die jeweilige Tunnel-ID und/oder Tunnel-Adresse und/oder Tunnel-VLAN reserviert sind oder werden, dies zweckmäßigerweise an den beteiligten Kernknoten im Transportnetzwerk. Bevorzugt wird auf der Verwaltungsebene sämtliche Weiterleitungs-Information in den Kernknoten nur für den oder die Stream-Tunnel gespeichert und nicht für einzelne Streams, die in diesem bzw. diesen zusammengefasst sind bzw. werden. Im Falle von Ethernet beispielsweise sind bevorzugt die FDB-Einträge (Filtering Database Entries) in den beteiligten Knoten für den jeweiligen Stream-Tunnel anstatt einzelne Streams gespeichert.

Für den Transport bzw. die Weiterleitung von mehreren, verschiedenen Streams zugeordneten Stream-Datenframes durch einen Stream-Tunnel, erfolgt bevorzugt - in Analogie zu den strukturierten Netzwerken insbesondere aus dem Providerbereich - unmittelbar vor bzw. bei Eintritt in den Tunnel eine "Einkapselung" der Frames und bei bzw. unmittelbar nach Austritt aus dem Stream-Tunnel eine "Entkapselung" der Datenframes der verschiedenen Streams.

Entsprechend zeichnet sich eine weitere Ausführungsform des erfindungsgemäßen Verfahrens dadurch aus, dass Stream-Datenframes, die an einem Randknoten ankommen, und über einen durch diesen Randknoten begrenzten Stream-Tunnel durch das Transportnetzwerk weitergeleitet werden sollen, von dem Randknoten wenigstens einen dem Stream-Tunnel zugeordneten, insbesondere ausschließlich für Stream-Datenframes vorgesehenen Tunnel-Tag und/oder Tunnel-Header hinzugefügt bekommen.

Die Weiterleitung des Stream-Datenframes in dem Transportnetzwerk erfolgt dann zweckmäßiger Weise ausschließlich basierend auf dem wenigstens einen Tunnel-Tag und/oder Tunnel-Header.

Bei dem wenigstens einen Tunnel-Tag und/oder Tunnel-Header handelt es sich zweckmäßiger Weise um einen solchen, der ausschließlich für Stream-Datenframes vorgesehen ist bzw. verwendet wird und bei deren Verwendung im Transportnetzwerk insbesondere QoS Eigenschaften garantiert werden können.

Durch die "Einkapselung" wird es möglich, unnötige Details von dem nur weiterleitenden Transportnetzwerk zu verstecken. Die Kernknoten des Transportnetzwerkes leiten dann insbesondere sämtliche Stream-Datenframes mit dem zum Tunnel gehörigen wenigstens einen Tunnel-Tag und/oder -Header weiter, ohne dass sie "merken", dass es sich um zwei oder mehr verschiedene Streams handelt.

Um die "Entkapselung" zu realisieren kann vorgesehen sein, dass der den Stream-Datenframes hinzugefügte, wenigstens eine Tunnel-Tag und/oder Tunnel-Header von wenigstens einem weiteren, ein anderes Ende des Stream-Tunnels begrenzenden Randknoten wieder entfernt wird. Die Stream-Datenframes werden dann von dem wenigstens einem weiteren Randknoten bevorzugt ohne den wenigstens einen Tunnel-Tag und/oder -Header weitergeleitet, etwa in ein Betreibernetzwerk am anderen Ende des Tunnels und/oder an einen dort befindlichen einzelnen Netzwerkteilnehmer, der mit dem Transportnetzwerk über den entkapselnden Randknoten verbunden ist.

Für die "Einkapselung" und "Entkapselung" können aus dem Stand der Technik vorbekannte Mechanismen in analoger Weise verwendet werden.

Beispielsweise kann, wie von dem "Mac-in-Mac"-Prinzip vorbekannt, ein einem Stream-Tunnel zugeordneter Header vorangestellt werden, und zwar erfindungsgemäß den Stream-Datenframes aller Streams, die in diesem Tunnel zusammengefasst bzw. durch diesen Tunnel weitergeleitet werden sollen. Ein vorangestellter Tunnel-Header kann insbesondere eine designierte Tunnel-Adresse für den jeweiligen Stream, und eine bevorzugt durch eine Randknoten-MAC, insbesondere die MAC des Randknotens am Anfang des betroffenen Tunnels gegebene Quell-Adresse und ein VLAN-Tag und eine i-SID für den Tunnel (Backbone Technologie) umfassen. Die designierte Tunnel-Adresse für den Stream ist zweckmäßiger eine nur für den Tunnel verwendete Adresse.

Auch ist es möglich, dass, wie vom "Q-in-Q"-Prinzip vorbekannt, den Stream-Datenframes zur "Einkapselung" dem Stream-Tunnel zugeordnete zusätzliche VLAN-Informationen für den Tunnel, insbesondere in Form wenigstens eines VLAN-Tags, hinzugefügt wird. Zusätzliche VLAN-Informationen können insbesondere vor einem VLAN-Tag des Stream-Datenframes eingefügt werden.

Schließlich kann auch, wie von dem MPLS-Prinzip (MPLS steht für Multi Protocol Label Switching) vorbekannt, eines oder auch mehrere zusätzliche (MPLS-)Label für den Stream-Tunnel hinzugefügt werden.

Bevorzugt erfolgt eine Protokoll-basierte Tunnel-Erzeugung, Registrierung und/oder Reservierung für eine automatische Kommunikations-Konfiguration im Transportnetzwerk.

Ein Echtzeitfluss-Reservierungsprotokoll, insbesondere MSRP, kann in dem bzw. den Betreibernetzwerken für die automatische Echtzeitfluss-Registrierung und Reservierung verwendet werden. Dieser Mechanismus kann auch mit der bekannten SPB- insbesondere SPB-M-Technologie kombiniert werden. SPB steht dabei für "Shortest Path Bridging", welches in IEEE802.1aq beschrieben ist und SPB-M für "Shortest Path Bridging - Mac". Bevorzugt erzeugen die Randknoten eine neue Echtzeit-Tunnel-Registrierung im Transportnetzwerk.

In zweckmäßiger Ausgestaltung kann vorgesehen sein, dass für die Einrichtung eines Streams zwischen zwei oder mehr über das Transportnetzwerk verbundene Netzwerkteilnehmern von wenigstens einem einen Stream-Initiator darstellenden Netzwerkteilnehmer eine Stream-Ankündigungsnachricht abgesendet und diese insbesondere im Netzwerk verteilt wird. Bei dem Stream-Initiator kann es sich sowohl um einen Sender, also Talker, als auch einen Empfänger, also Listener, handeln. Letzteres insbesondere dann, wenn der ebenfalls auf die Anmelderin zurückgehende, in der europäischen Patentanmeldung Nr. EP 18 15 4319 beschriebene Mechanismus, der ein Szenario mit mehreren Talkern und einem Listener ermöglicht, genutzt wird (auch als "Multiple Talker per Stream" bezeichnet). In diesem Falle wird nicht wie im klassischen AVB-Szenario mit einem Talker und mehreren Listenern von dem Talker eine Talker-Ankündigungsnachricht, insbesondere Talker Advertise gesendet, sondern der eine Listener kündigt an, dass er Daten über einen Stream empfangen möchte, wofür er eine Listener-Ankündigungsnachricht, insbesondere einen Listener Advertise sendet und dieser im Netz verteilt wird. In Reaktion darauf können dann mehrere Talker dem von dem Listener angekündigten Stream beitreten, was durch Herausgabe einer Talker-Beitrittsnachricht, insbesondere Talker Join, möglich ist.

Auch kann vorgesehen sein, dass ein Stream-Tunnel im Transportnetzwerk nur bzw. erst dann eingerichtet wird, wenn ein Echtzeitfluss zwischen wenigstens zwei Betreibernetzwerken oder wenigstens zwei einzelnen Netzwerkteilnehmern oder wenigstens einem Betreibernetzwerk und wenigstens einem einzelnen Netzwerkteilnehmer, die über das Transportnetzwerk verbunden sind, angefragt wird oder erforderlich ist. Dies kann insbesondere durch eine Listener (oder auch Talker) Join Nachricht, bevorzugt gemäß MSRP, erfolgen.

Wie aus dem Stand der Technik hinlänglich vorbekannt, werden von einem Talker oder auch Listener herausgegebene, klassische Ankündigungs- und Beitrittsnachrichten von sämtlichen beteiligten Netzwerkknoten verarbeitet. Erfindungsgemäß ist dies in dem Transportnetzwerk nicht vorgesehen. Vielmehr wird eine klassische Stream-Ankündigungsnachricht, insbesondere ein Talker- oder Listener-Advertise, nur von den einen Tunnel-Stream begrenzenden Randknoten verarbeitet, nicht jedoch von den Kernknoten im Transportnetzwerk. Die Kernknoten geben die klassischen, zu den einzelnen Streams gehörenden Ankündigungs- bzw. Beitrittsnachrichten ohne Auswertung beziehungsweise Verarbeitung weiter (Rand-zu-Rand- bzw. Edge-Edge-Kommunikation). Stream-Ankündigungsnachrichten werden mit anderen Worten zwischen Randknoten getunnelt.

Eine weitere Ausführungsform zeichnet sich entsprechend dadurch aus, dass das oder jedes Betreibernetzwerk einen oder mehrere Betreiber-Knoten umfasst, und die Stream-Ankündigungsnachricht nur von Betreiber- und/oder Randknoten verarbeitet wird, während die Stream-Ankündigungsnachricht von den Kernknoten ohne Verarbeitung im Transportnetzwerk weitergeleitet wird. Die Verarbeitung durch Betreiber- beziehungsweise Randknoten kann dabei insbesondere das Speichern von in der Stream-Ankündigungsnachricht enthaltenen Informationen umfassen. Dass durch die Kernknoten keine Verarbeitung von Stream-Ankündigungsnachrichten erfolgt, kann insbesondere bedeuten, dass diese ohne die Speicherung von Informationen aus diesen und/oder ohne eine Veränderung dieser Nachrichten bis zu dem bzw. den eines bzw. mehreren andere Enden eines Stream-Tunnels begrenzenden Randknoten weitergegeben werden.

Es sei angemerkt, dass einerseits die Möglichkeit besteht, dass ein Stream-Tunnel durch genau zwei Randknoten begrenzt ist. Dann verbindet er insbesondere ein Betreibernetzwerk oder einzelnen Betreiber-Netzwerteilnehmer auf der einen Seite mit einem Betreibernetzwerk oder einzelnen Betreiber-Netzwerkteilnehmer auf der anderen Seite. Selbstverständlich ist es aber auch möglich, dass ein Stream-Tunnel zwischen mehr als zwei Randknoten eingerichtet ist beziehungsweise wird, etwa eine Y-artige Konfiguration vorliegt, gemäß derer sich ein Tunnel von einem Betreibernetzwerk oder einzelnen Teilnehmer auf der einen Seite zu zwei Betreibernetzwerken oder einzelnen Teilnehmern oder einem Betreibernetzwerk und einem einzelnen Teilnehmer auf der anderen Seiter erstreckt. Szenarien mit einem Randknoten am Anfang eines Stream-Tunnels und mehr als zwei Randknoten an gegenüberliegenden Enden sind natürlich ebenfalls möglich.

In Weiterbildung des erfindungsgemäßen Verfahrens ist für wenigstens einen Stream-Tunnel eine feste Bandbreite in dem Transportnetzwerk, insbesondere an beteiligten Kernknoten, reserviert. In diesem Falle kann ein den Stream-Tunnel anfangsseitig begrenzender Randknoten überwachen, welche Bandbreite momentan genutzt wird, und er kann für den Fall, dass die fest vorgegebene Bandbreite erschöpft ist, verhindern, dass weitere Streams den Stream-Tunnel nutzen. Insbesondere verhindert der Randknoten dann, dass Stream-Datenframes die zu weiteren, bisher noch nicht am Stream-Tunnel teilnehmenden bzw. diesem noch nicht zugeordneten Streams gehören, nicht über das Transportnetzwerk weitergeleitet werden. Dies kann erreicht werden indem ein Einkapseln solcher Stream-Datenframes beispielsweise durch Hinzufügen wenigstens eines dem Stream-Tunnel zugeordneten Tunnel-Tags und/oder Tunnel-Headers unterbleibt.

Auch kann vorgesehen sein, dass für wenigstens einen Stream-Tunnel die von dem Stream-Tunnel genutzte Bandbreite dynamisch angepasst wird, insbesondere in Abhängigkeit der Streams, die in diesem Stream-Tunnel momentan kombiniert sind, diesen also Stream-Tunnel momentan nutzen und/oder Streams, die diesen Stream-Tunnel zusätzlich nutzen wollen.

Gemäß einer weiteren bevorzugten Ausgestaltung ist ferner vorgesehen, dass für wenigstens einen Stream-Tunnel die Reservierung von Netzwerkressourcen an Kernknoten unter Verwendung eines Reservierungsprotokolls abgewickelt wird. So wird es möglich, dass die Kommunikationskonfiguration - auch in dem Transportnetzwerk - automatisch durchgeführt wird. Sofern mehrere Stream-Tunnel existieren bzw. eingerichtet werden, wird bevorzugt für mehrere, besonders bevorzugt alle Stream-Tunnel die Reservierung von Netzwerkressourcen an Kernknoten unter Verwendung eines Reservierungsprotokolls abgewickelt. Analog dazu kann vorgesehen sein, dass die Reservierung von Netzwerkressourcen an Randknoten unter Verwendung eines Reservierungsprotokolls abgewickelt wird.

Als Reservierungsprotokolle können zum Beispiel das aus dem Stand der Technik vorbekannte Stream Reservation Protocol, abgekürzt SRP und/oder Multiple Stream Registration Protocol, abgekürzt MSRP (siehe IEEE802.1Qat sowie IEEE802.1Q, insbesondere Abschnitt 35) zum Einsatz kommen. Im Transportnetzwerk erfolgt dann insbesondere eine Anpassung der Reservierung auf die jeweils verwendete Tunnel Information, insbesondere mit der Tunnel-ID, anstatt den einzelnen Stream IDs. Anstatt für einzelne Streams zu reservieren, wird für eine oder mehrere Stream-Tunnel reserviert. In der Reservierung werden die Tunnel-ID und/oder Tunnel-Weiterleite-Information verwendet bzw. gespeichert. Im Transportnetzwerk werden keine Streams mehr "gesehen".

In vorteilhafter Weiterbildung des erfindungsgemäßen Verfahrens kann ferner vorgesehen sein, dass von einem Randknoten, der eine Stream-Ankündigungsnachricht an einem von dem Transportnetzwerk wegweisenden Port empfängt, in Reaktion auf die Stream-Ankündigungsnachricht eine Tunnel-Ankündigungsnachricht für einen Stream-Tunnel in das Transportnetzwerk gesendet wird, und die Tunnel-Ankündigungsnachricht bevorzugt von Kern-Netzwerkknoten verarbeitet wird, wobei die Verarbeitung insbesondere das Speichern von in der Tunnel-Ankündigungsnachricht enthaltenen Informationen umfasst, und/oder die Tunnel-Ankündigungsnachricht eine dem Stream-Tunnel zugeordnete Tunnel-ID, insbesondere Tunnel-Adresse umfasst.

Von einem Randknoten am Anfang eines Stream-Tunnels wird gemäß dieser Ausführungsform in Reaktion auf den Empfang einer klassischen Ankündigungsnachricht, insbesondere Talker oder Listener Advertises eines einzelnen Streams, eine Tunnel-Ankündigungsnachricht, die auch als Tunnel Advertise bezeichnet werden kann, herausgegeben. Diese wird dann - im Gegensatz zu Ankündigungsnachrichten, die einzelnen Streams zugeordnet sind - bevorzugt von den Kernknoten im Transportnetzwerk ausgewertet bzw. verarbeitet (Peer-to-Peer-Kommunikation). Die Verarbeitung durch Kernknoten kann dabei insbesondere das Speichern von in der Tunnel-Ankündigungsnachricht enthaltenen Informationen umfassen. Der Tunnel Advertise kann im Transportnetzwerk zur Registrierung der für die Einrichtung benötigten Information führen. Die Aktivierung der eigentlichen Tunnel Reservierung erfolgt bevorzugt analog zum Stand der Technik erst durch eine Tunnel Join Nachricht, die analog zum Stream Join (Talker oder auch Listener Join) eines Streams im Betreibernetzwerk von einem Randknoten im Transportnetzwerk für einen Tunnel ausgelöst wird. Ebenfalls analog zum Stand der Technik kann bei der Registrierung eine bereits erkennbar nicht mögliche Reservierung für einen Tunnel durch eine Erweiterung der Tunnel Advertise Information gekennzeichnet werden und zu einer Ablehnung von Reservierung im weiteren Pfad im Tunnel bzw. Transportnetzwerk zu den Randknoten führen.

Somit wird ein existierendes, aus dem Stand der Technik vorbekanntes Datenobjekt (Advertise) für die Echtzeit-Fluss-Registrierung in dem Transportnetzwerk, und eine weiteres vorbekanntes Datenobjekt (Join) zur Reservierung im Transportnetzwerk insbesondere in Kombination mit einem Reservierungsprotokoll, genutzt.

In bevorzugter Ausführung umfasst die Tunnel-Ankündigungsnachricht eine Tunnel-ID, insbesondere Tunnel-Adresse.

Rein optional kann eine Tunnel-Ankündigungsnachricht eine oder mehrere IDs von dem Stream-Tunnel zugeordneten Streams sowie eine Fehlerangabe aufweisen. Die optionale Angabe der Stream-ID beziehungsweise Stream-IDs ermöglicht einen einfachen Wechsel der Zuordnung von Stream-IDs zu Stream-Tunneln, insbesondere in einem den Anfang eines Stream-Tunnels definierenden Randknoten. Andere Randknoten können sich dann anhand dieser Information an den jeweiligen Stream-Tunnel beziehungsweise den jeweiligen Stream-Tunneln anmelden. Eine Fehlerangabe wird insbesondere nur dann in der Tunnel-Ankündigungsnachricht, insbesondere im Tunnel Advertise enthalten sein bzw. hinzugefügt, wenn bei der Weitergabe der Tunnel-Ankündigungsnachricht Probleme festgestellt werden, und eine Anmeldung dadurch nicht möglich ist.

Eine Tunnel-Ankündigungsnachricht, die bevorzugt nur eine Tunnel-ID und ggf. die ID wenigstens eines dem Stream-Tunnel zugeordneten Streams und/oder eine Fehlerangabe umfasst, kann insbesondere in demjenigen Falle gesendet werden, dass für den Stream-Tunnel bereits ein Pfad und eine feste Bandbreite und eine feste Latenz eingereicht sind.

Auch ist es möglich, dass die Tunnel-Ankündigungsnachricht zusätzlich eine Information über eine akkumulierte Latenz umfasst. Dies insbesondere für den Fall, dass für den Stream-Tunnel bereits ein Pfad und eine feste Bandbreite eingerichtet ist, jedoch bei der Einrichtung noch keine feste Latenz bekannt ist. Dies ermöglicht eine Pfadeinrichtung im Transportnetzwerk ohne die Implementierungen in den Netzwerkknoten detailliert kennen zu müssen. Zusätzlich ist dadurch der Austausch von Netzwerkknoten im Netzwerk durch andere nicht exakt baugleiche Varianten möglich.

Die Tunnel-Ankündigungsnachricht kann darüber hinaus zusätzlich eine Traffic Spezifikation umfassen. Dies insbesondere, wenn für einen Stream-Tunnel bereits ein Pfad eingerichtet ist, jedoch noch keine feste Bandbreite eingerichtet und keine feste Latenz bestimmt ist.

Auch kann die Tunnel-Ankündigungsnachricht zusätzlich zu einem, mehreren oder allen der vorgenannten Angaben bzw. Parameter Tunnel Transport Informationen, insbesondere die Angabe wenigstens eines Tunnel-Tags und/oder Tunnel-Headers, welcher Stream-Datenframes, die über den Stream-Tunnel weitergeleitet werden sollen, hinzugefügt ist oder wird, umfassen. Dies bevorzugt in demjenigen Falle, dass für einen Stream-Tunnel bisher nur eine Pfad-Information vorliegt, die Tunnelreservierung (QoS-Weiterleitung) jedoch noch erforderlich ist, insbesondere noch keine Weiterleitung für den Stream-Tunnel und keine feste Bandbreite und keine feste Latenz eingerichtet sind.

Eine weitere Ausführungsform des erfindungsgemäßen Verfahrens zeichnet sich dadurch aus, dass von einem einen Stream-Teilnehmer darstellenden Netzwerkteilnehmer, der eine von einem einen Stream-Initiator darstellenden Netzwerkteilnehmer gesendete Stream-Ankündigungsnachricht empfangen hat, und an dem angekündigten Stream teilnehmen möchte, eine Stream-Beitrittsnachricht gesendet wird.

Dann kann weiterhin vorgesehen sein, dass das oder jedes Betreibernetzwerk einen oder mehrere Betreiber-Knoten umfasst, und die Stream-Beitrittsnachricht von Betreiber-Knoten und/oder Randknoten verarbeitet wird, wobei die Verarbeitung insbesondere das Speichern von in der Stream-Beitrittsnachricht enthaltenen Informationen und/oder ein Verändern der Stream-Beitrittsnachricht umfasst, und die Stream-Beitrittsnachricht von den Kernknoten ohne Verarbeitung, insbesondere ohne die Speicherung von Informationen aus dieser und/oder ohne eine Veränderung dieser, weitergeleitet wird. Stream-Beitrittsnachrichten werden mit anderen Worten wie die späteren Streams auf dem Pfad zwischen den Randknoten im Transportnetzwerk getunnelt.

Das Tunneln der vorbekannten, konventionellen Stream-Reservierung zwischen Randknoten macht es insbesondere möglich, dass die Reservierung im Transportnetzwerk durch die Randknoten ausgelöst wird und automatisch erfolgt. Dazu kann der Randknoten eine zuvor empfangene Stream Advertise Information, die durch das Reservierungsprotokoll im Netzwerkknoten gespeichert ist und einem Stream-Tunnel zugeordnet ist, nutzen, um beim Empfang eines Stream Join aus dem Betreibernetzwerk für den zugeordneten Stream-Tunnel im Transportnetzwerk ein Tunnel Join auszulösen.

Weiterhin kann vorgesehen sein, dass von einem einen Stream-Tunnel begrenzenden Randknoten, der eine Stream-Beitrittsnachricht an einen von dem Transportnetzwerk wegweisenden Port empfängt, in Reaktion auf die Stream-Beitrittsnachricht eine Tunnel-Beitrittsnachricht in das Transportnetzwerk gesendet wird. Bei der Stream-Beitrittsnachricht handelt es sich bevorzugt um einen Talker oder auch Listener Join, wie er aus dem Stand der Technik und der zuvor erwähnten europäischen Patentanmeldung Nr. EP 18 15 4319 bereits hinlänglich vorbekannt ist.

Die Tunnel-Beitrittsnachricht wird - im Gegensatz zu der Stream-Beitrittsnachricht, die nur weitergegeben wird - zweckmäßiger Weise von den beteiligten Kernknoten im Transportnetzwerk verarbeitet. Infolge einer Verarbeitung der Tunnel-Beitrittsnachricht durch Kernknoten werden insbesondere - in völliger Analogie zum Stand der Technik (Talker bzw. Listener Join) - Netzwerkressourcen an den Kernknoten für den Tunnel reserviert und/oder die Weiterleitung im Tunnel wird freigeschaltet. Die Verarbeitung kann auch das Speichern von in der Tunnel-Beitrittsnachricht enthaltenen Informationen und/oder ein Verändern der Tunnel-Beitrittsnachricht umfassen. Es kann insbesondere - wiederum in Analogie zum Stand der Technik - ein in der Tunnel-Beitrittsnachricht enthaltender Reservierungsstatus an jedem Kernknoten angepasst werden.

Die Tunnel-Beitrittsnachricht stellt ein Datenobjekt dar, welches in dem erfindungsgemäßen Tunnel-Szenario insbesondere dem vorbekannten Talker bzw. Listener Join entspricht.

Bei den Streams, die erfindungsgemäß in einem Stream-Tunnel zusammengefasst werden, kann es sich sowohl um Streams handeln, über die genau ein Talker an genau einen Listener Daten sendet bzw. senden möchte, als auch um Streams, über die genau ein Talker an zwei oder mehr Listener Daten sendet bzw. senden möchte ("Multipel Listeners per Talker") als auch um Streams, über die mehrere Talker an genau eine Listener Daten senden bzw. senden möchten ("Multiple Talkers per Stream").

Für den Fall eines Talkers und mehrerer Listener kommen insbesondere folgende neue Datenobjekte zum Einsatz, die jeweils Randknoten gesendet werden:
Tunnel Talker Advertise (Tunnel T_{Advertise})
Tunnel Listener Join (Tunnel L_{Join})
Talker Tunnel Tree

Für den Fall eines Listeners und mehrerer Talker kommen insbesondere folgende neue Datenobjekte zum Einsatz, die jeweils Randknoten gesendet werden:
Tunnel Listener Advertise (Tunnel T_{Advertise})
Tunnel Talker Join (Tunnel L_{Join})
Listener Tunnel Tree

In beiden Fällen umfasst der Tunnel Advertise bevorzugt die vorstehend genannten Informationen.

Der Tunnel Join umfasst in beiden Fällen bevorzugt eine Tunnel-ID und insbesondere einen Reservierungsstatus.

Das Ende eines Stream-Tunnels kann beispielsweise durch Registrierung eines Targets als Listener, bevorzugt unter Verwendung eines neuen Reservierungsprotokoll-, insbesondere MSRP-Listener-Registrierungs-Attributs gefunden werden, wenn ein On-Demand-Algorithmus im Netzwerk verwendet wird, um einen Pfad einzurichten. Dieser Anwendungsfall ist typisch für einen Controller, insbesondere SDN-Controller, der das Transportnetzwerk kontrolliert (insbesondere Ressourcen, Pfade, Shaper,...) und die jeweiligen Stream Advertise und Stream Join Informationen aus den Betreibernetzwerken für eine Pfad-Etablierung verwendet. Ein solcher Controller, welcher gemäß dem Stand der Technik die Pfade und/oder Reservierungen einzelner Streams in einem Netzwerk kontrollieren kann bzw. kontrolliert, kann auch als "Tunnel-Controller" dienen, also um die Pfade und/oder Reservierungen für den oder die Stream-Tunnel im Transportnetzwerk zu kontrollieren. Für das Kontrollieren der Pfade und/oder Reservierungen einzelner Streams in dem oder den Betreibernetzwerken und das Kontrollieren der Pfade und/oder Reservierungen für den oder die Stream-Tunnel kann der gleiche Controller, insbesondere SDN-Controller zum Einsatz kommen. Eine weitere Option besteht darin, den Default-Weiterleite-Baum (englisch: default forwarding tree) für die Verteilung der Tunnel-Registrierung zu verwenden, was weiterhin durch Management- und Konfigurations-Mechanismen reduziert werden kann. Die weitere Reduzierung eines Default-Weiterleite-Baums ist bei AVB als Prunning bekannt und kann weiterhin durch die in AVB-Netzwerken optional verwendeten Protokolle MVRP und MMRP bei der Stream Reservierung erfolgen.

Als besonders geeignet hat sich das erfindungsgemäße Verfahren für ein Szenario erwiesen, in dem zwischen bestehenden Feldbusnetzwerken in industriellen Anlagen, an die Feldgeräte angeschlossen sind, und einer oder mehreren insbesondere in einem entfernten Data-Center bzw. "in der Cloud" ausgeführten SPS-Services Daten zu übermitteln sind. Die Feldbusnetzwerke und der oder die SPS-Services können dann über ein Transportnetzwerk verbunden sein, in dem erfindungsgemäße einzelne Streams in einem oder mehreren Stream-Tunneln zusammengefasst sind bzw. werden.

Insbesondere in einem solchen Fall kann vorgesehen sein, dass ein Randknoten in ein System, welches einen Dienst, insbesondere SPS-Dienst, hosted, integriert ist. Das "Einkapsel" und/oder "Entkapseln" kann dann beispielsweise unter Nutzung eines virtuellen Switches bzw. des sogenannten vSwitch-Prinzips erfolgen. Ein virtueller Randknoten kann mit geeignetem Hardware-Support realisiert werden.

Entsprechend ist gemäß einer weiteren bevorzugten Ausführungsform des erfindungsgemäßen Verfahrens vorgesehen, dass Stream-Datenframes zwischen einem oder mehreren Feldgeräten und wenigstens einer insbesondere speicherprogrammierbaren Steuerung über wenigstens einen Stream-Tunnel übertragen werden, wobei die Steuerung bevorzugt Software-implementiert ist und an einem von den Endgeräten entfernten Ort, insbesondere in einem von den Feldgeräten entfernten Rechenzentrum ausgeführt wird.

Auch kann vorgesehen sein, dass für wenigstens einen einem Stream-Tunnel zugeordneten, den Stream-Tunnel nutzenden Stream an denjenigen Randknoten, die den Stream-Tunnel begrenzen, der CB-Modus, insbesondere gemäß IEEE802.1CB, aktiviert ist bzw. wird, und dieser Stream bevorzugt von diesem Stream-Tunnel auf einen anderen Stream-Tunnel insbesondere nahtlos überführt wird.

Gemäß weiterer vorteilhafter Ausgestaltung kann vorgesehen sein, dass mehrere Datenframes, die von verschiedenen Streams stammen und gemäß der vorliegenden Erfindung über einen Stream-Tunnel durch das Transportnetzwerk weitegeleitet werden, in einem (großen) Datenframe zusammengefasst sind bzw. werden. Solche Frames stellen dann praktisch Summenframes dar. Frames, in denen mehrere Datenframes von verschiedenen Streams zusammengefasst sind können dann auch durch sogenannte "Jumbo-Frames", die insbesondere mehr als 1500 Byte Daten umfassen bzw. "tragen", gegeben sein. "Jumbo-Frames" sind zwar in IEEE802 nicht definiert, werden jedoch von den meisten typischen IT-Transportnetzwerken unterstützt.

Für die Zusammenfassung von Datenframes mehrerer Streams in einem Frame kann auch der aus der auf die Anmelderin zugehenden europäischen Patentanmeldung mit der Nr. EP 18 18 1209.0 bekannte Mechanismus genutzt werden. Gemäß diesem werden Datenframes übertragen, die mehrere, die von verschiedenen Sendern stammende bzw. für verschiedene Empfänger bestimmte Unterdatensätze bzw. Datenblöcke (auch als "Paylets" bezeichnet) umfassen. Im Rahmen der vorliegenden Erfindung wäre dieser Mechanismus ausschließlich an Randknoten von Tunnels erforderlich. Bei der Übertragung wird dazu in den Randknoten für jeden Unterdatensatz bzw. Datenblock bzw. Paylet aus einem Datenframe eines Senders/Talkers eine eindeutige ID hinzugefügt, wodurch sich die einzelnen Paylets eindeutig den Streams zuordnen lassen und dadurch am Randknoten auf der anderen Seite wieder aufgeteilt werden können oder durch einen Listener des Streams verarbeitet werden können, bevor diese gemeinsam als Datenblock in einem Frame übertragen werden. Durch die Zusammenfassung mehrerer Datenblöcke in Paylets eines (Summen)Frames kann auf den zusätzlichen Frameheader und ein insbesondere bei Ethernet notwendiges Padding mit ungenutzen Informationen zum Erreichen der minimalen Framegröße bei der Übertragung von kleinen Datenblöcken verzichtet werden. Vorteilhaft bei der späteren Verarbeitung kann zusätzlich eine Längeninformation vor dem Datenblock hinzugefügt werden, um eine variable Länge und konfigurationslose Zuordnung der Daten zu ermöglichen.

Ein weiterer Gegenstand der vorliegenden Erfindung ist eine Vorrichtung, die zur Durchführung des erfindungsgemäßen Verfahrens zur Datenkommunikation ausgebildet und eingerichtet ist.

Weiterhin betrifft die Erfindung ein Computerprogramm, das Programmcodemittel zur Durchführung der Schritte des erfindungsgemäßen Verfahrens zur Datenkommunikation umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens zur Datenkommunikation durchzuführen.

Bei dem computerlesbaren Medium kann es sich beispielsweise um eine CD-ROM oder DVD oder einen USB- oder Flash-Speicher handeln. Es sei angemerkt, dass unter einem computerlesbaren Medium nicht ausschließlich ein körperliches Medium zu verstehen sein soll, sondern ein solches beispielsweise auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung einer Ausführungsform des Verfahrens unter Bezugnahme auf die beiliegende Zeichnung deutlich. Darin ist
- FIG 1: eine rein schematische Darstellung eines strukturierten Netzwerkes mit mehreren Betreibernetzwerken und einem diese verbindenden Transportnetzwerk, in welchem Stream-Tunnel eingerichtet sind;
- FIG 2: eine rein schematische Darstellung von zwei zu unterschiedlichen Streams gehörigen Stream-Datenframes;
- FIG 3: eine rein schematische Darstellung eines in Analogie zu Mac-in-Mac eingekapselten Stream-Datenframes;
- FIG 4: eine rein schematische Darstellung eines in Analogie zu Q-in-Q eingekapselten Stream-Datenframes;
- FIG 5: eine rein schematische Darstellung eines in Analogie zu MPLS eingekapselten Stream-Datenframes;
- FIG 6: zwei in Analogie zu Mac-in-Mac für einen ersten Stream-Tunnel eingekapselte Stream-Datenframes verschiedener Streams in rein schematischer Darstellung;
- FIG 7: zwei in Analogie zu Mac-in-Mac für einen zweiten Stream-Tunnel eingekapselte Stream-Datenframes verschiedener Streams in rein schematischer Darstellung;
- FIG 8: eine rein schematische Darstellung zu einem Stream-Tunnel mit fester oder dynamischer Bandbreite;
- FIG 9: eine rein schematische Darstellung zur Edge-to-Edge-Kommunikation von klassischen Advertises und Joins einzelner Streams sowie Peer-to-Peer-Kommunikation von Tunnel Advertises und Tunnel Joins im Transportnetzwerk;
- FIG 10: den Ablauf einer Stream- und Stream-Tunnel-Einrichtung in schematischer Darstellung;
- FIG 11: einen Talker Advertise und einen Listener Join in rein schematischer Darstellung;
- FIG 12: einen Tunnel Advertise und einen Tunel Join in rein schematischer Darstellung;
- FIG 13: Tunnel Advertises mit verschiedenem Inhalt in rein schematischer Darstellung;
- FIG 14: den Ablauf einer Stream-Einrichtung für den Fall, dass der Pfad und die Bandbreite eines Stream-Tunnels bereits eingerichtet sind und eine feste Latenz gegeben ist in rein schematischer Darstellung;
- FIG 15: einen Ablauf für den Fall, dass zu einem bestehenden Stream-Tunnel ein weiterer Listener hinzukommt in rein schematischer Darstellung;
- FIG 16: einen Ablauf für den Fall, dass zu einem bestehenden Stream-Tunnel ein weiterer Stream hinzukommt in rein schematischer Darstellung;
- FIG 17: den Wechsel eines Streams von einem ersten auf einen zweiten Stream-Tunnel in rein schematischer Darstellung; und
- FIG 18: in schematischer Darstellung den Ablauf bei einem Wechsel gemäß FIG 17.

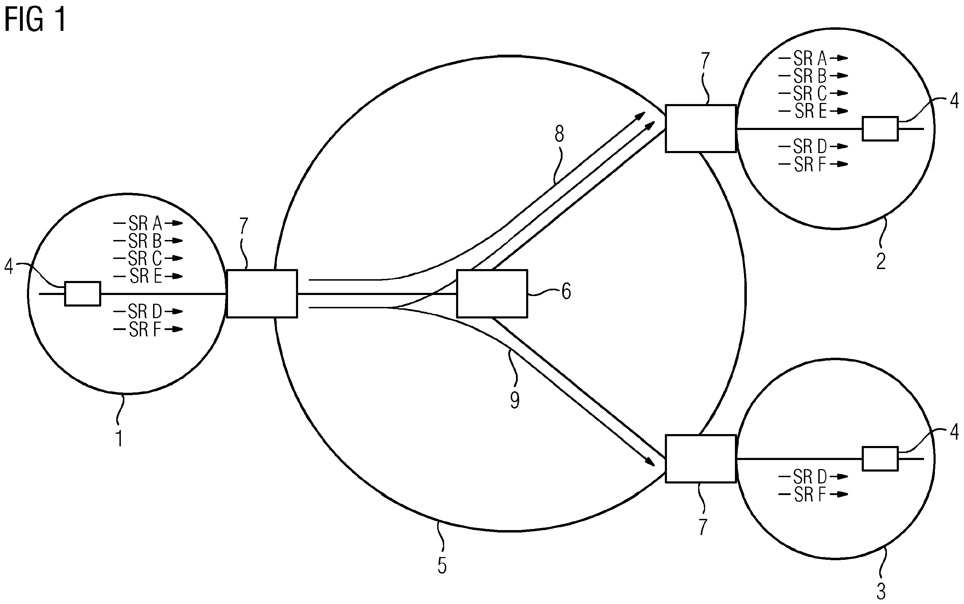

Die FIG 1 zeigt in rein schematischer Darstellung ein strukturiertes Netzwerk, welches bei dem hier dargestellten Ausführungsbeispiel drei Betreibernetzwerke 1, 2, 3 umfasst, die in der FIG 1 jeweils rein schematisch durch einen mit dem zugehörigen Bezugszeichen versehenen Kreis dargestellt sind. Jedes der drei Betreibernetzwerke 1, 2, 3 umfasst eine Mehrzahl von Betreiber-Netzwerkknoten 4, die bei dem dargestellten Ausführungsbeispiel in Form von Bridges gegeben sind. Es sei angemerkt, dass in der rein schematischen FIG 1 für jedes der drei Betreibernetzwerke 1, 2, 3 nur je eine Betreiber-Bridge 4 beispielhaft gezeigt ist. An jedes der drei Betreibernetzwerke 1, 2, 3 sind jeweils mehrere Netzwerkteilnehmer darstellende Endgeräte angeschlossen, die in den Figuren nicht dargestellt sind.

Bei den in FIG 1 rechten beiden Betreibernetzwerken 2, 3 handelt es sich vorliegend um industrielle Betreibernetzwerke, die Teil einer Automatisierungsanlage zur Steuerung eines nicht weiter dargestellten industriellen Prozesses bilden. An die Betreibernetzwerke 2, 3 sind jeweils eine Mehrzahl von nicht gezeigten Feldgeräten angeschlossen. Diese zeichnen sich vorliegend dadurch aus, dass in diesen jeweils Netzknoten und Endgerät, insbesondere in Form eines Sensors und/oder Aktors vereint sind, konkret in einem IO-Modul mit zwei geswitchen externen Ports, wie heutzutage für Ethernet-Fabrikhallenlösungen üblich.

Bei dem in FIG 1 linken Betreibernetzwerk 1 handelt es sich um ein von dem Betreibernetzwerk 2 und 3 entferntes Rechenzentrum, in dem SPS-Dienste zur Steuerung des industriellen Prozesses virtualisiert bereitgestellt bzw. ausgeführt werden. Zum Betrieb der nicht dargestellten Anlage müssen zwischen der Vielzahl von Feldgeräten in den Betreibernetzwerken 2 und 3 sowie den SPS Diensten im Betreibernetzwerk 1 Daten in Echtzeit ausgetauscht werden.

Das strukturierte Netzwerk umfasst neben den drei Betreibernetzwerken 1, 2, 3 ein diese miteinander verbindendes Transportnetzwerk 5, welches in FIG 1 ebenfalls rein schematisch durch einen Kreis angedeutet ist. Das Transportnetzwerk 5 umfasst ebenfalls eine Mehrzahl von Netzwerkknoten, die vorliegend als Kernknoten 6 bezeichnet werden. Auch hinsichtlich des Transportnetzwerkes 5 gilt, dass von der Mehrzahl von Kernknoten 6 in der FIG 1 nur einer beispielhaft dargestellt ist. Bei den Kernknoten 6 des Transportnetzwerkes 5 handelt es sich - in Analogie zu den Betreiberknoten 4 der Betreibernetzwerke 1, 2, 3 - um Bridges.

Jedes der drei Betreibernetzwerke 1, 2, 3 ist über einen Randknoten 7 mit dem Transportnetzwerk 5 verbunden. Die Randknoten 7 sind vorliegend ebenfalls durch Bridges gegeben.

Die Betreiberknoten 4, Kernknoten 6 und Randknoten 7 sind TSN-fähig.

Die Virtualisierung der SPS-Dienste in dem Betreibernetzwerk 1 bietet den Vorteil, dass vergleichsweise günstige IT-Technologie in einer geschützten Umgebung genutzt werden kann. Allerdings ist jegliche erforderliche Endgeräteinformation zu den SPS-Services in Echtzeit zu transportieren. Daten müssen somit von den lokalen Feldgeräten in den Betreiber- bzw. Maschinennetzwerken 2, 3 zu der bzw. den SPS-Dienst-Instanzen in dem Rechenzentrum 1 transportiert werden und umgekehrt. Aufgrund der zeitsensitiven Natur muss der Datentransfer unter Nutzung von Echtzeitflüssen, konkret Streams im Sinne von IEEE802, übertragen werden.

Die Virtualisierung bietet auch den Vorteil des Handlings einer Mehrzahl von Instanzen eines Services an einem Ort mit der gleichen Hardware. Im Falle von SPS-Diensten führt dies jedoch zu einer riesigen Anzahl von Echtzeitflüssen, dies auch in dem Falle, dass unter Nutzung des "Multiple Listners per Talker"-Prinzips und dem aus der auf die Anmelderin zurückgehenden EP 18 154 319 bekannten Mechanismus ("Multiple Talker per Stream") die Anzahl von Echtzeitflüssen bereits reduziert werden kann.

Der zentralisierte Ansatz, welcher durch Virtualisierung zur Kostenreduktion unterstützt wird, führt somit zu einem Engpass im Netzwerk.

Dieser Problematik wird gemäß der vorliegenden Erfindung damit begegnet, dass in dem Transportnetzwerk Stream-Tunnel 8, 9 eingerichtet sind bzw. werden, in denen jeweils mehrere Streams zusammengefasst werden. In der FIG 1 sind rein beispielhaft insgesamt sechs Streams SR A - SR F dargestellt, jeweils rein schematisch durch einen entsprechend bezeichneten Pfeil. Über jeden dieser Streams SR A - SR F werden Daten von dem bzw. den SPS-Diensten aus dem Betreibernetzwerk 1 an Endgeräten in dem Betreibernetzwerk 2 und/oder 3 übertragen. Der bzw. die SPS-Dienste stellen entsprechend Talker und die Endgeräte in den Betreibernetzwerken 2 und 3 Listener dar.

Es sei angemerkt, dass aus Gründen der vereinfachten Darstellung in der FIG 1 lediglich Streams SR A - SR F sowie Stream-Tunnel 8, 9 mit zugehörigen Pfeilen dargestellt sind, über die ein Echtzeit-Transfer aus dem Betreibernetzwerk 1 in das Betreibernetzwerk 2 und/oder 3 erfolgen kann bzw. erfolgt. Selbstverständlich ist ein Datentransfer in umgekehrter Richtung und auch Szenarien, bei denen mehrere Talker an einen Listener senden, gleichermaßen möglich.

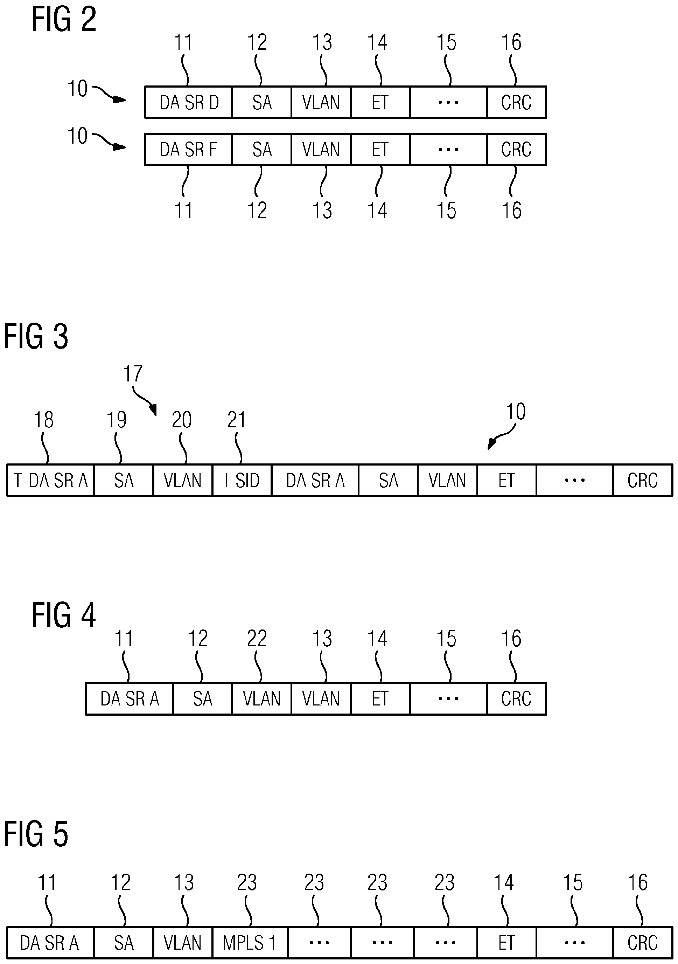

Die FIG 2 zeigt rein schematisch und beispielhaft Datenframes 10 von zwei der Streams SR A bis SR F, konkret der Streams SR D und SR F. Jeder Stream-Datenframe 10 umfasst in an sich bekannter Weise eine designierte Adresse 11 des jeweiligen Streams, die in der FIG 2 mit "DA SR D" bzw. "DA SR F" bezeichnet ist, eine in FIG 2 mit "SA" bezeichnete Quelladresse 12, ein mit "VLAN" bezeichnetes VLAN-Tag 13, einen mit "ET" bezeichnetes Feld 14 mit dem Ethertyp, einen Nutzdatenbereich 15 (englisch: payload) sowie eine mit "CRC" bezeichnete Prüfsumme 16.

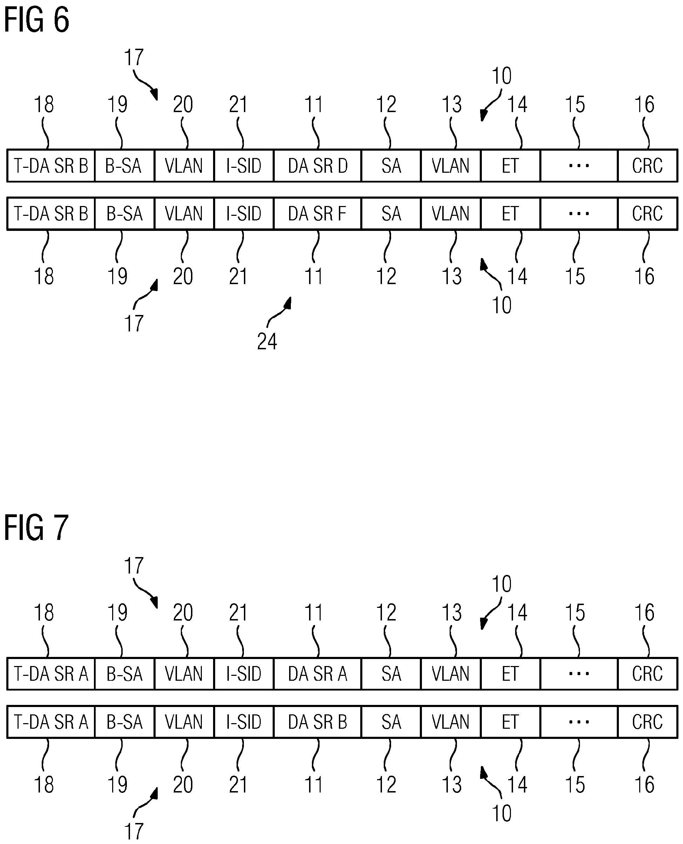

Während in den Betreibernetzwerken 1, 2, 3 in ebenfalls aus dem Stand der Technik hinlänglich vorbekannter Weise an allen beteiligten Betreiberknoten 4 Netzwerkressourcen (beispielsweise Adresstabelleneinträge und/oder Framebuffer und/oder Sendezeitintervalle und/oder Bandbreite) für die einzelnen Streams SR A - SR F reserviert sind bzw. werden, was zu einer großen Menge an Kontrollinformationen für die Echtzeitflüsse SR A - SR F führt, werden durch jeden Stream-Tunnel 8, 9 Stream-Datenframes 10 weitergeleitet, die verschiedenen Streams SR A - SR F zugeordnet sind bzw. von verschiedenen Streams SR A - SR F stammen, wobei deren Weiterleitung unter Nutzung von Netzwerkressourcen erfolgt, die an dem beteiligten Kernknoten 6 des Transportnetzwerkes 5 für den jeweiligen Stream-Tunnel 8, 9 und nicht die einzelnen Streams SR A - SR F reserviert sind und/oder werden. Die Identifizierung der Reservierung der Tunnel 8, 9 basiert auf den jeweiligen Tunnel- IDs, die eigentliche Einrichtung der Weiterleitung und Verwendung der Ressourcen in den Netzwerkknoten erfolgt anhand der zusätzlichen Informationen zur Datenübertragung im Transportnetzwerk 5, welche beispielhaft in den Figuren 3, 4 und 5 für verschiedene Technologien und im Speziellen für Mac-in-Mac für die Tunnel 8 und 9 in den Figuren 6 und 7 dargestellt sind.

Bei dem dargestellten Ausführungsbeispiel werden über den Stream-Tunnel 8 die Streams SR A bis SR E in das Betreibernetzwerk 2 und über den Stream-Tunnel 9 die Stream SR D und SR F in die Betreibernetzwerke 2 und 3 weitergeleitet.

In der FIG 1 ist somit sowohl ein von nur zwei Randknoten 7 begrenzter Stream-Tunnel 8, der zwei Betreibernetzwerke 1, 2 miteinander verbindet, als auch ein von drei Randknoten 7 begrenzter Stream-Tunnel 9 gezeigt, der drei Betreibernetzwerke 1, 2, 3 miteinander verbindet.

Es sei angemerkt, dass, auch wenn dies in FIG 1 nicht gezeigt ist, es selbstverständlich möglich ist, dass sich ein Stream-Tunnel 8, 9 zwischen mehr als drei Randknoten 7 erstreckt und entsprechend mehr als drei Betreibernetzwerke 1, 2, 3 miteinander verbindet. Darüber hinaus kann alternativ dazu, dass ein Randknoten 7 ein weiteres, seinerseits einen oder mehrere Knoten 4 umfassendes Netzwerk 1, 2, 3 mit dem Transportnetzwerk 5 verbindet, selbstverständlich auch ein einzelner Netzwerkteilnehmer über einen Randknoten 7 mit dem Transportnetzwerk 5 verbunden sein kann, beispielsweise ein einzelnes System, etwa Form eines Industrie-PCs, auf dem SPS-Dienste gehosted werden. Insbesondere in einem solchen Fall kann der Randknoten 7 auch in den Netzwerkteilnehmer, insbesondere das System, integriert sein, zum Beispiel in Form eines virtuellen Switches (vSwitch) bzw. einer virtuellen Bridge.

Für die Weiterleitung von mehreren, verschiedenen Streams SR A - SR F zugeordneten Stream-Datenframes 10 durch einen Stream-Tunnel 8, 9, erfolgt bei bzw. unmittelbar vor Eintritt in den jeweiligen Tunnel 8, 9 eine "Einkapselung" der Frames 10 und bei bzw. unmittelbar nach Austritt aus dem Stream-Tunnel eine "Entkapselung" der Datenframes 10 der verschiedenen Streams SR A - SR F.

Das "Einkapseln" und das "Entkapseln" geschieht an den und durch die Randknoten 7. Konkret bekommen Stream-Datenframes 10 der Streams SR A - SR F, die an dem in FIG 1 linken Randknoten 7, welcher den Anfang der beiden Stream-Tunnel 8, 9 definiert, ankommen, und über einen durch diesen Randknoten 7 begrenzten Stream-Tunnel 8, 9 durch das Transportnetzwerk 5 weitergeleitet werden sollen, von dem Randknoten 7 wenigstens einen dem jeweiligen Stream-Tunnel 8, 9 zugeordneten, insbesondere ausschließlich für Stream-Datenframes vorgesehenen Tunnel-Header 17 hinzugefügt.

Die Weiterleitung der Stream-Datenframes 10 in dem Transportnetzwerk 5 erfolgt dann ausschließlich basierend auf dem Tunnel-Header 17.

Durch die "Einkapselung" wird es möglich, unnötige Details von dem nur weiterleitenden Transportnetzwerk 5 zu verstecken. Die Kernknoten 6 des Transportnetzwerkes 5 leiten sämtliche Stream-Datenframes 10 mit dem zum jeweiligen Tunnel 8, 9 gehörigen Tunnel-Header 17 weiter, ohne dass sie "merken", dass es sich um zwei oder mehr verschiedene Streams SR A - SR F handelt.

Um die "Entkapselung" zu realisieren ist vorgesehen, dass der den Stream-Datenframes 10 hinzugefügte Tunnel-Header 17 von dem bzw. den das Ende des jeweiligen Stream-Tunnels 8, 9 begrenzenden Randknoten 7 wieder entfernt wird. Die Stream-Datenframes 10 werden dann von dem bzw. den beiden endseitigen Randknoten 7 ohne den Tunnel-Header 17 weitergeleitet, vorliegend in das jeweilige Betreibernetzwerk 2, 3 am anderen Ende des Tunnels 8, 9.

Für die "Einkapselung" und "Entkapselung" können aus dem Stand der Technik vorbekannte Mechanismen in analoger Weise verwendet werden, etwa das Mac-in-Mac, Q-in-Q oder auch das MPLS-Prinzip (Multi Protocol Label Switching).

Im Rahmen des hier beschriebenen Ausführungsbeispiel kommt das "Mac-in-Mac"-Prinzip analog zum Einsatz, wobei jedem Stream-Datenframe 10 an dem in Bezug auf den jeweiligen Tunnel 8, 9 anfangsseitigen Randknoten 7 ein Tunnel-Header 17 vorangestellt, der eine designierte Tunnel-Adresse 18 für den jeweiligen Stream SR A - SR F, die in FIG 3 "T-DA SR A" für den Tunnel 8 bezeichnet ist, eine Quell-Adresse 19, die durch die MAC des Randknotens 7 am Anfang der Tunnel 8, 9 gegeben ist, eine Tunnel-VLAN bzw. ein Tunnel-VLAN-Tag 20 und eine i-SID 21 für den Tunnel (Backbone Technologie) umfasst, wie es in FIG 3 oben gezeigt ist. Die Datenübertragung an mehrere Randknoten 7 von Tunnel 9 erfolgt analog zum Stand der Technik im Transportnetzwerk 5 mit einem gemeinsamen Tunnel-Header 17.

In den Figuren 4 und 5 ist - zum Vergleich - gezeigt, wie die Stream-Datenframes 10 durch Hinzufügung anderer Attribute bzw. von Attributen an anderer Stelle in Analogie zum Q-in-Q- und MPLS-Prinzip eingekapselt werden können. Gemäß Q-in-Q (FIG 4) wird insbesondere nur ein weiterer, dem jeweiligen Tunnel 8, 9 zugeordneter VLAN-Tag 22 hinzugefügt, dies bevorzugt vor dem VLAN-Tag 13 des jeweiligen Stream-Datenframes 10. Bei MPLS kommen bevorzugt eines oder mehrere zusätzliche Label 23 hinzu, beispielsweise hinter der VLAN 13 des jeweiligen Stream-Datenframes 10.

In der FIG 6 sind - beispielhaft - eingekapselte Datenframes 24 für den bzw. von dem Stream-Tunnel 8 gezeigt und in FIG 7 für den Stream-Tunnel 9. Wie man erkennt, umfassen die Tunnel-Header 17 der beiden Tunnel 8, 9 verschiedene designierte Tunnel-Adressen 18, die in den Figuren mit "T-DA SR A" für den Tunnel 8 und "T-DA SR B" für den Tunnel 9 bezeichnet sind. In dem Tunnel 8 sind, wie oben bereits angemerkt, die Streams SR A - SR E zusammengefasst, wobei in FIG 7 nur Beispielhaft eingekapselte Daten-Frames 24 für die Streams SRA und SR B gezeigt sind, wie man an der designierten Adresse 11 aus den Stream-Datenframes 10 sieht. Für den Tunnel 9 sind für beide darin zusammengefasste Streams SR D und SR F eingekapselte Datenframes 24 gezeigt.

Unabhängig davon, wie die Einkapselung konkret erfolgt, gilt, dass sämtliche hinzugefügten Tags bzw. Attribute an dem bzw. den Enden des jeweiligen Stream-Tunnels 8, 9, konkret dem bzw. den dortigen Randknoten 7 wieder entfernt und entsprechend in ihrer ursprünglichen Form im jeweiligen Betreibernetzwerk 2, 3 oder auch an einen einzelnen Netzwerkteilnehmer an einem Tunnelende weitergeleitet werden.

Die Echtzeit-Tunnel 8 und 9 sehen für das Transportnetzwerk 5 wie zwei Echtzeitflüsse, also Streams, aus. Die Tunnel-Einkapselungs-Frame-Information wird von dem Randknoten 7 am Anfang der Tunnel 8, 9 hinzugefügt und von den Randknoten 7 am Ende der Tunnel 8, 9 wieder entfernt. Mehrere Echtzeitflüsse, also Streams SRA - SR F, in den Betreibernetzwerken 1, 2, 3 werden in dem Transportnetzwerk 5 mit derselben Frame-Information (konkret derselben designierten Tunnel Adresse 18 ("T-DA SR A" für Tunnel 8) weitergeleitet. Dies reduziert die Anzahl von in dem Transportnetzwerk 5 benötigten Adressen. Für das in FIG 1 beispielhaft gezeigte Stream- und Tunnel-Szenario konkret von sechs Adressen für die Streams SR A - SR F auf zwei Adressen für die Tunnel 8 und 9.

Was die Einrichtung der einzelnen Streams SR A - SR F in den Betreibernetzwerken 1, 2, 3 angeht, insbesondere die Reservierung von Netzwerkressourcen an Betreiberknoten 4, wird, wie aus dem Stand der Technik hinlänglich vorbekannt, ein Reservierungsprotokoll genutzt. Vorliegend kommt MSRP zum Einsatz.

Dabei wird in an sich bekannter Weise von einem einen Stream-Initiator darstellenden Netzwerkteilnehmer eine Stream-Ankündigungsnachricht abgesendet und im Netzwerk verteilt. Bei der Stream-Ankündigungsnachricht handelt es sich, wenn der Stream-Initiator ein Talker ist, um eine sogenannte Talker-Advertise-Nachricht bzw. kurz Talker Advertise A. Bildet ein Listener den Stream-Initiator, wie gemäß der europäischen Patentanmeldung EP 18 15 4319, wird ein Listener Advertise von diesem gesendet. Im Folgenden werden die Abläufe beispielhaft für einen Talker als Initiator und einen Listener als Teilnehmer beschrieben, diese kommen im umgekehrten Fall völlig analog zur Anwendung.

Für die Stream-Tunnel 8, 9 im Transportnetzwerk 5 kann entweder eine feste Bandbreite eingerichtet sein oder die genutzte Bandbreite wird dynamisch in Abhängigkeit der Streams SR A - SR F, die den jeweiligen Tunnel 8, 9 momentan nutzen bzw. nutzen wollen, angepasst.

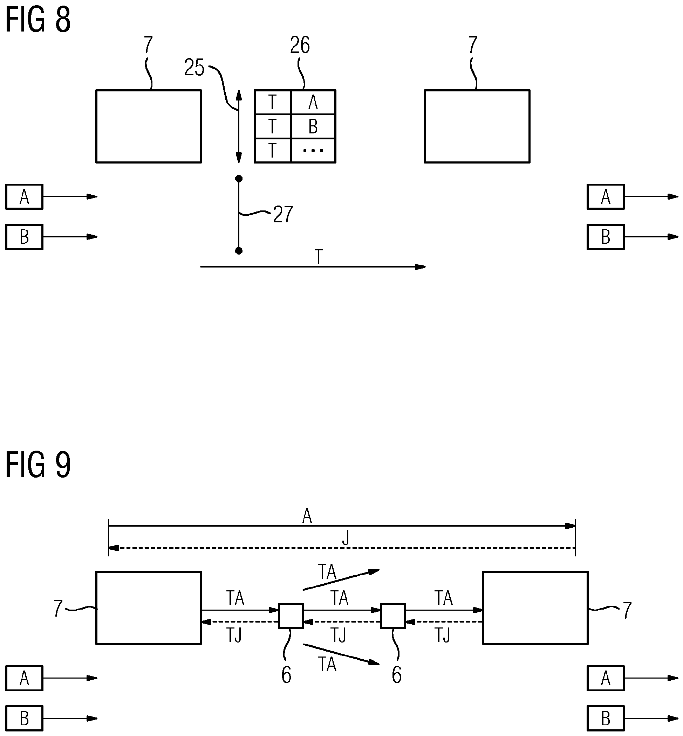

In der FIG 8 sind diese beiden Möglichkeiten rein schematisch dargestellt. Gezeigt sind konkret zwei Randknoten 7, welchen einen Stream-Tunnel 8, 9 begrenzen. Links von dem linken Randknoten 7 sowie rechts von dem rechten Randknoten 7 ist die Situation in einem Betreibernetzwerk 1, 2, 3 angedeutet, in dem eine individuelle Reservierung für die Streams A und B erfolgt. Zwischen den beiden Randknoten 7, in dem in FIG 3 nicht weiter dargestellten Transportnetzwerk 5, kann die Tunnel-Bandbreite zum Beispiel flexibel an die Streams SR A - SR F, die den Tunnel 8, 9 nutzen, angepasst werden, was durch einen vertikalen Doppelpfeil 25 und ein daneben dargestelltes Blockelement 26, in dem die Bandbreite für die Streams A und B sowie ggf. weitere Streams für den Tunnel (mit "..." angedeutet) dargestellt ist. Die Reservierungen werden in diesem Falle zu einem Echtzeitfluss mit dynamischer Bandbreite kombiniert. Die Reservierungen können in dem Transportnetzwerk 5 unter Nutzung existierender Reservierungsprotokoll-Mechanismen, insbesondere MSRP-Mechanismen für einen Echtzeitfluss, also Stream, mit den Tunnel-Eigenschaften genutzt werden.

Der mit "T" bezeichnete Pfeil steht dabei symbolisch für den Tunnel 8 zwischen den Randknoten 7 im Transportnetzwerk 5 für die Übertragung der einzelnen Streams A und B.

Die Möglichkeit einer festen Bandbreite für einen Tunnel 8, 9 ist in FIG 8 durch eine in zwei Punkten endenden vertikale Linie 27 angedeutet. In einem solchen Fall wird der aktuelle Bedarf nur gegen die verfügbare Bandbreite gecheckt. Eine dynamische Reservierung von Ressourcen in dem Transportnetzwerl ist in diesem Fall nicht erforderlich.

Wenn eine Reservierung an einem Randknoten 7 fehlschlägt, schlägt die Tunnel-Zuordnung fehl und die Stream-Datenframes 10 werden von dem Randknoten 7 nicht eingekapselt, um in dem Tunnel 8, 9 transportiert zu werden. Dadurch wird eine Zugangskontrolle erreicht und eine mögliche Überlastung des Tunnels 8, 9 verhindert. Im Falle einer erfolgreichen Reservierung werden ankommende Stream-Datenframes 10 eingekapselt und weitergeleitet.

Die Signalisierung einzelner Streams SR A - SR F erfolgt nur zwischen Randknoten 7. Alle Kernknoten 6 sehen nur den bzw. die Stream-Tunnel 8, 9 und leiten alle eingekapselten Stream-Datenframes 10 gleichermaßen weiter. Die Randknoten 7 bilden die Reservierungen auf eine Stream-Tunnel 8, 9 ab und leiten die empfangenen individuellen Echtzeitfluss-Kontroll-Informationen in das bzw. die Betreibernetzwerke weiter.

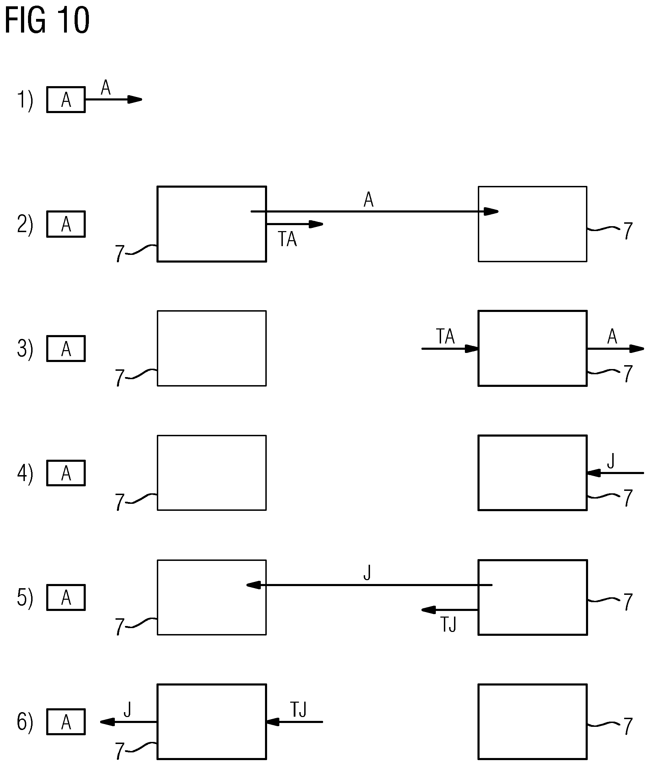

Wie aus dem Stand der Technik vorbekannt, wird der Talker Advertise A im Betreibernetzwerk 1, 2, 3 von sämtlichen Betreiberknoten 4 verarbeitet. Erfindungsgemäß ist dies in dem Transportnetzwerk 5 nicht vorgesehen. Vielmehr wird ein Talker Advertise A nur von den Randknoten 7 verarbeitet, nicht jedoch von den Kernknoten 6. Die Kernknoten 6 geben die klassischen, zu den einzelnen Streams SR A - SR F gehörenden Talker Advertises A ohne Auswertung beziehungsweise Verarbeitung weiter (Rand-zu-Rand- bzw. Edge-Edge-Kommunikation). Die Talker Advertises A werden mit anderen Worten zwischen Randknoten 7 getunnelt. Dies ist rein schematisch in den Figuren 9 und 10 dargestellt, wobei in der FIG 9 beispielhaft zwei Streams A und B angedeutet und sämtliche Nachrichten gezeigt sind, und in FIG 10 der Ablauf in einzelnen Schritten 1) bis 6) skizziert ist.

In den Figuren 9 und 10 sind - analog zu FIG 8 zwei Randknoten 7 gezeigt, die einen Tunnel 8, 9 begrenzen. Links und rechts von den Randknoten 7 in dem bzw. den Betreibernetzwerken 1, 2, 3 erfolgt eine Verarbeitung der Talker Advertises A. Durch das Transportnetzwerk 5 wird der Advertise A jedoch "getunnelt", was in FIG 9 durch einen großen, mit "A" bezeichneten, die beiden Randknoten 7 verbindenden Pfeil angedeutet ist. Dass durch die Kernknoten 6 keine Verarbeitung der Advertises A erfolgt, bedeutet insbesondere, dass die Advertises A ohne die Speicherung von Informationen aus diesen und/oder ohne eine Veränderung dieser bis zu dem bzw. anderen Ende(n) des jeweiligen Tunnels 8, 9, konkret den oder die dortigen Randknoten 7 weitergegeben werden.

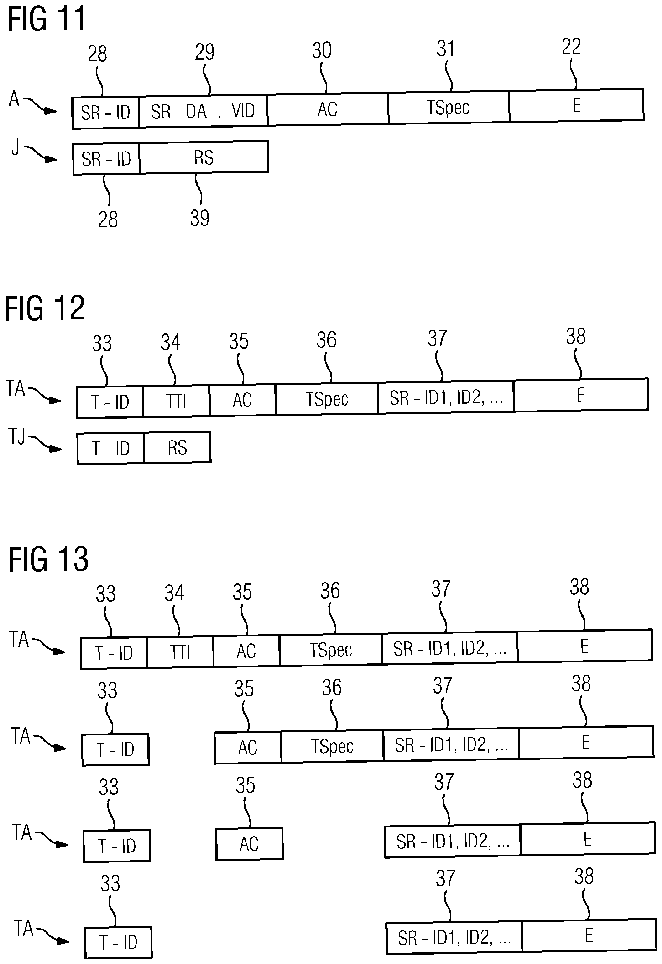

Die FIG 11 zeigt rein schematisch einen Talker Advertise A und Listener Join J, auf den im Folgenden noch näher eingegangen wird. Der Talker Advertise A umfasst eine mit "SR-ID" bezeichnete Stream-ID 28, ein Feld 29 mit einer designierten Stream Adresse und einer VID (mit "SR-DA + VID" bezeichnet), eine mit AL bezeichnete akkumulierte Latenz 30, eine TSpec 31 und ein mit "E" bezeichnetes Feld 32, in welchem eine Fehlerinformation hinzugefügt werden kann. Eine Fehlerinformation ist nur vorhanden, wenn bei der Weitergabe des Advertises A Probleme festgestellt werden und eine Anmeldung dadurch nicht möglich ist.

Bevorzugt ist vorgesehen, dass der Randknoten 7 am Anfang des Tunnels 8, 9 in Reaktion darauf, dass er eine "klassische" Talker Advertise Nachricht A für einen Stream SR A - SR F an einem von dem Transportnetzwerk 5 wegweisenden Port empfängt, eine Tunnel-Ankündigungsnachricht (im Weiteren Tunnel Advertise TA) für den Tunnel 8 bzw. 9 in das Transportnetzwerk 5 sendet, welche von Kernknoten 6 verarbeitet wird (Peer-to-Peer-Kommunikation). Die Verarbeitung umfasst dabei insbesondere das Speichern von in den Tunnel Advertises TA enthaltenen Informationen. Wie bei der Stream-Reservierung im Betreibernetzwerk 1, 2, 3 wird im Transportnetzwerk 5 bei der Tunnel-Reservierung bevorzugt zuerst eine Tunnel-Registrierung an den Kernknoten 6 durchgeführt. Dadurch werden alle für eine spätere Tunnel-Einrichtung benötigten Tunnel-Informationen in den Kernknoten 6 gespeichert. Bei der Registrierung kann eine Vorabprüfung erfolgen, welche im Fehlerfall zu einer Ergänzung des Tunnel Advertise TA mit der Fehlerinformation E führt. Bei der dynamischen Einrichtung wird bevorzugt entsprechend der Stream Reservierung nach dem Stand der Technik mit dem Tunnel Join TJ bei der Tunnel-Reservierung die Tunnel-Weiterleitung und ggf. die Ressourcenverwendung für den Tunnel konfiguriert. Der Randknoten 7 überprüft ferner die Ressourcen, insbesondere die Bandbreite des Tunnels 8, 9 und fügt ggf. eine Fehlerinformation zu dem Talker Advertise des jeweiligen Streams A hinzu falls nicht genügend Ressourcen für die Übertragung im Tunnel 8, 9 zur Verfügung stehen.

Mit dem in Reaktion auf den Empfang eines Talker Advertise A gesendeten Tunnel Advertise TA wird ein existierendes, aus dem Stand der Technik an sich vorbekanntes Datenobjekt (Advertise) für die Echtzeit-Fluss-Reservierung in dem Transportnetzwerk 5 genutzt, jedoch für die Ressourcen-Reservierung für einen Tunnel 8,9 und nicht für einzelne Streams SR A - SR F, wie im Stand der Technik. Der Tunnel Advertise TA wird insbesondere in Kombination mit einem Reservierungsprotokoll, etwa MSRP (IEEE 802.1, insbesondere Kapitel 35), genutzt.

In FIG 10 zeigt in Schritt 1) rein schematisch, dass im Betreibernetzwerk 1, 2, 3 ein Advertise A gesendet wird und Schritt 2), dass der Talker Advertise A zwischen den Randknoten 7 getunnelt und von dem anfangsseitigen Randknoten 7 oder Tunnel Advertise TA an den bzw. die die nächstliegenden Kernknoten 6 gesendet wird.

In der FIG 12 sind ein Talker Advertise TA und ein Tunnel Join TJ, auf den weiter unten noch eingegangen wird, dargestellt. Das Tunnel Advertise TA wird gemäß der in FIG 13 dargestellten Varianten im Transportnetzwerk 5 jeweils zwischen den benachbarten Kernknoten 6 ausgetauscht und verarbeitet, bis die darin enthaltene Information bei den jeweiligen Randknoten 7 ankommt.

Wie bereits angemerkt, wird im Rahmen des vorliegenden Ausführungsbeispiels das in FIG 1 dargestellt Szenario, gemäß dem über die Stream-Tunnel 8, 9 Frames von dem linken Randknoten 7 an einen bzw. beide rechte Randknoten 7 gesendet werden, beschrieben, was zu einem ein Talker und ein Listener bzw. ein Talker und zwei Listener Szenario für die Randknoten 7 korrespondiert. Bei dem Tunnel Advertise TA handelt es sich somit praktisch um einen Tunnel "Talker" Advertise und bei dem Tunnel Join um einen Tunnel "Listener" Join. Werden hingegen Daten von mehreren Randknoten auf der einen Seite eines Tunnels an einen Randknoten auf der anderen Seite gesendet, was in den Figuren nicht dargestellt ist, würden entsprechend Tunnel "Listener" Advertise und Tunnel "Talker" Join gesendet. Da vorliegend nur auf das Szenario gemäß FIG 1 weiter eingegangen wird, wird vereinfacht bzw. verallgemeinert von einem Tunnel Advertise TA und Tunnel Join TJ gesprochen.

Der Tunnel Advertise TA kann verschiedene Informationen umfassen, was insbesondere davon abhängt, inwieweit eine Tunnel 8, 9 bereits eingerichtet ist. Die FIG 13 zeigt vier verschiedene Möglichkeiten des Inhalts des Tunnel Advertises TA.

Am meistens Angaben wird der Tunnel Advertise TA für den Fall umfassen, dass für einen Tunnel 8, 9 bisher nur die reine Pfadinformation vorliegt. Dann weist er konkret eine mit "T-ID" bezeichnete Tunnel-ID 33, mit "TTI" bezeichnete Tunnel Transport Informationen 34, eine mit "AL" zeichnete akkumulierte Latenz 35 des Tunnels und eine mit "TSpec" bezeichnete Traffic Spezifikation 36 des Tunnels auf. Der Tunnel Advertise TA umfasst somit Informationen für die QoS und die Weiterleitung.

Rein optional können die IDs 37 derjenigen Streams SR A - SR F, die in dem Tunnel 8, 9 zusammengefast sind bzw. werden, und eine Fehlerinformation 38 (siehe FIG 12 und FIG 13 oben) vorgesehen sein. Die optionale Angabe der Stream-IDs 37 ermöglicht einen einfachen Wechsel der Zuordnung von Stream-IDs zu Stream-Tunneln 8, 9, insbesondere in einem den Anfang eines Stream-Tunnel 8, 9 definierenden Randknoten 7. Andere Randknoten 7 können sich dann anhand dieser Information an den jeweiligen Stream-Tunnel 8, 9 beziehungsweise den jeweiligen Stream-Tunneln 8, 9 anmelden sobald sie eine Listener Join Nachricht J aus einem Betreiberknoten 4 ihres Betreibernetzwerkes 1, 2, 3 erhalten. Eine Fehlerangabe 38 wird insbesondere nur dann enthalten sein bzw. hinzugefügt, wenn bei der Weitergabe des Tunnel Advertises TA Probleme festgestellt werden, und eine Anmeldung dadurch nicht möglich ist.

Für den Fall, dass bereits ein Pfad für den Tunnel 8, 9 eingerichtet, insbesondere eine Tunnel-Adresse bereits konfiguriert ist, sind die Tunnel Transport Informationen 34 nicht mehr erforderlich, was in FIG 13 der zweiten Variante von oben entspricht.

Ist bereits ein Pfad eingerichtet und liegt eine Bandbreite fest, ist also sowohl die Tunnel Weiterleitung als auch die QoS konfiguriert, kann auch auf die Traffic Spezifikation 36 verzichtet werden, was der zweiten Variante von unten in FIG 13 entspricht.

Wenn schließlich auch eine feste Latenz gegeben ist, ist auch die akkumulierte Latenz nicht mehr erforderlich, was der untersten Variante in FIG 13 entspricht. Es sei angemerkt, dass in diesem Fall auf einen Tunnel Advertise TA auch gänzlich verzichtet werden kann, insbesondere wenn die optionalen Stream ID Informationen 38 nicht verwendet werden.

Wird ein Tunnel Advertise TA gesendet, wird dieser von Kernknoten 6 zu Kernknoten 6 weitergegeben und erreicht am Ende des Tunnels 8, 9 den bzw. die endseitigen Randknoten 7 des Tunnels 8, 9, was in der FIG 10 in Schritt 3) schematisch gezeigt ist. Der Tunnel Advertise TA wird nicht an das oder die Betreibernetzwerke 1, 2, 3 bzw. einzelne Netzwerkteilnehmer am anderen Ende des Tunnels 8, 9 weitergegeben, sondern nur der durch das Transportnetzwerk 5 getunnelte Talker Advertise A, was ebenfalls in Schritt 3) von FIG 10 schematisch angedeutet ist. Der Talker Advertise A wird an Betreiberknoten 4 sowie Endgeräte in dem jeweiligen Betreibernetzwerk 1, 2, 3 weitergegeben, bevorzugt wiederum gemäß MSRP (vgl. insbesondere IEEE 802.1 Kapitel 35).

Im Betreibernetzwerk 1, 2, 3 wird dann von einem (oder auch mehreren) einen Listener darstellenden Netzwerkteilnehmer, der einen Talker Advertise A empfangen hat, und an dem angekündigten Stream SR A bis SR F teilnehmen möchte, eine Stream-Beitrittsnachricht, konkret ein Listener Join J, gesendet, wiederum bevorzugt gemäß MSRP.

In den Betreibernetzwerken 1, 2, 3 werden die Listener Joins J - genau wie die Talker Advertises A - in an sich bekannter Weise von den Betreiberknoten 4 verarbeitet, wobei insbesondere eine Ressourcen-Reservierung und Freischaltung der Weiterleitung erfolgt.

Ein an einem Randknoten 7 ankommender Listener Join J ist in Schritt 4) in FIG 10 schematisch dargestellt.

Der Listener Join J wird - genau wie der Talker Advertise - nicht von den Kernknoten 6 des Transportnetzwerkes 5 verarbeitet sondern von Randknoten 7 zu Randknoten 7 "getunnelt" (siehe Schritt 5) in FIG 10).

Der Randknoten 7, der den Listener Join J an einen von dem Transportnetzwerk 5 wegweisenden Port empfängt (siehe Schritt 4 und 5), sendet in Reaktion darauf eine Tunnel-Beitrittsnachricht, konkret einen Tunnel Join TJ in das Transportnetzwerk 5. Der Tunnel Join TJ wird - im Gegensatz zu dem Listener Join J - von den beteiligten Kernknoten 6 im Transportnetzwerk 5 verarbeitet, wobei insbesondere eine Freischaltung der Tunnel-Weiterleitung und Reservierung erfolgt. Auch kann - wiederum in Analogie zu dem einzelne Streams betreffenden Stand der Technik - ein in dem Tunnel Join TJ enthaltener Reservierungsstatus 39 (siehe FIG 12 unten) an jedem Kernknoten 6 angepasst werden, in Abhängigkeit des Erfolgs der Reservierung.

Der Tunnel Join TJ stellt ein Datenobjekt dar, welches in dem erfindungsgemäßen Tunnel-Szenario insbesondere dem vorbekannten, klassischen Talker bzw. Listener Join entspricht.

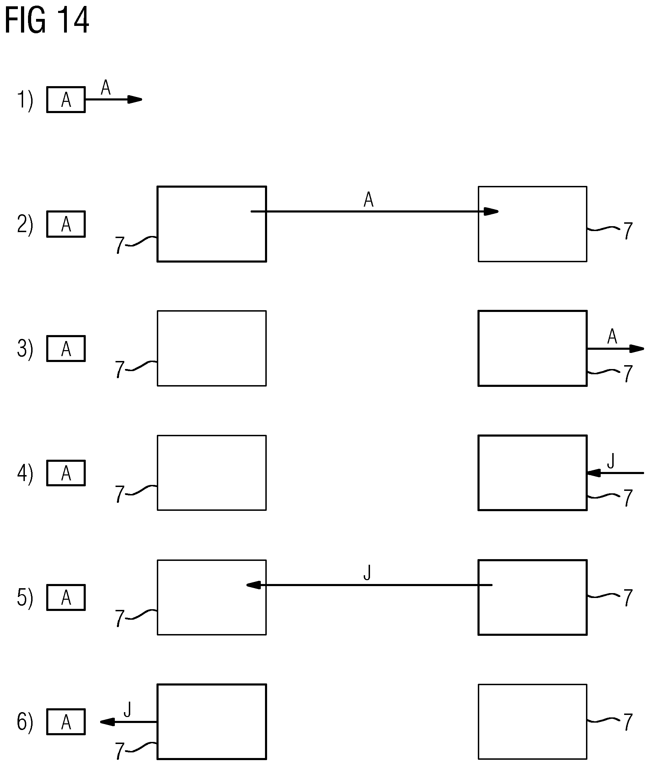

Wenn der Tunnel Join TJ den anfangsseitigen Randknoten 7 erreicht (Schritt 6) in FIG 10 und 14 links), aktiviert der Randknoten 7 die Weiterleitung von Stream-Datenframes 10 mit den zusätzlichen Informationen für den Tunnel 8, 9. Die Listener Join Nachricht J wird von dem in Figur in den Figuren 10 und 14 linken, anfangsseitigen Randknoten 7 in das Betreibernetzwerk 1, 2, 3 und zu dem Stream-Initiator, also vorliegend dem Talker, weitergeleitet, wobei auch an den Betreiberknoten 4 in dem Betreibernetzwerk 1, 2, 3 an welches der Talker angeschlossen ist, die Ressourcen-Reservierung und Freischaltung der Weiterleitung erfolgt (ebenfalls Schritt 6) in FIG 10 und 14).

Wie vorstehend angemerkt, kann für den Fall, dass für einen Tunnel 8, 9 bereits ein Pfad und Bandbreite eingerichtet sind und eine feste Latenz gegeben ist, auf einen Tunnel Advertise TA auch verzichtet werden. Dies gilt gleichermaßen für den Tunnel Join TJ. Der zugehörige Ablauf ist in FIG 14 - erneut in sechs Schritten 1) bis 6) - skizziert. Der einzige Unterschied zu dem Ablauf gemäß FIG 13 besteht darin, dass keine Tunnel Advertise TA und kein Tunnel Join TJ gesendet werden, sondern durch das Transportnetzwerk 5 nur der Talker Advertise A und der Listener Join J getunnelt werden (Edge-to-Edge-Kommunikation).

Über den vorstehend beschriebenen Ablauf kann ein Stream-Tunnel 8, 9 eingerichtet werden, wenn erstmals ein Talker - oder auch Listener - als Stream-Initiator einen Stream ankündigt und sich ein Stream-Teilnehmer an diesem anmeldet.

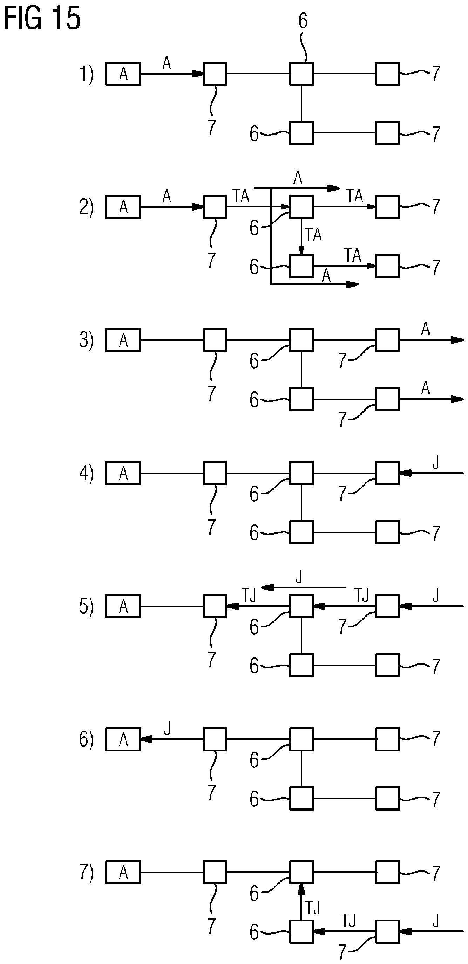

Selbstverständlich können, nachdem ein Tunnel 8, 9 einmal auf diese Weise eingerichtet wurde, noch weitere Stream-Teilnehmer hinzukommen. Ein zugehöriger Ablauf ist - rein schematisch - in FIG 15 dargestellt, konkret in sieben Schritten 1) bis 7). Dabei zeigen die Schritte 1) bis 6) nochmals den Ablauf für der ersten Stream-Teilnehmer, wobei in Schritt 1) von einem solchen, der durch einen Talker (oder auch Listener) gegeben ist, ein Talker (oder Listener) Advertise A gesendet wird, der Join J in Schritt 2) durch das Transportnetzwerk 5 vom in FIG 15 linken, anfangsseitigen Randknoten 7 zu hier zwei endseitigen Randknoten 7 getunnelt wird (Edge-to-Edge-Kommunikation), und ein Tunnel Advertise TA von Kernknoten 6 zu Kernknoten 6 gesendet und verarbeitet wird (Peer-to-Peer-Kommunikation). Gemäß Schritt 3) wird der Talker (oder Listener) Advertise A in sämtliche Betreibernetzwerke 1, 2, 3, die über das Transportnetzwerk 5 mit dem Betreibernetzwerk 1, 2, 3 des Stream-Initiators verbunden sind, und an die dort angeschlossenen Endgeräte (nicht dargestellt) weitergegeben. In Schritt 4) meldet sich ein erster, in der Figur ebenfalls nicht gezeigter Stream-Teilnehmer an dem angekündigten Stream an und sendet einen Listener (oder auch Talker) Join J, der den oberen, rechten Randknoten 7, welcher dessen Betreibernetzwerk 1, 2, 3 mit dem Transportnetzwerk 5 verbindet, erreicht. Dieser Randknoten 7 gibt den Listener Join J weiter (Edge-to-Edge) und ein Tunnel Join J wird, wie vorstehend beschrieben, von Kernknoten 6 zu Kernknoten 6 weitergegeben und verarbeitet (Peer-to-Peer), wie in Schritt 5) dargestellt, wobei die Ressourcen-Reservierung und Freischaltung der Weiterleitung für den Tunnel erfolgt. In das Betreibernetzwerk 1, 2, 3 des Stream-Initiators wird der Listener (oder Talker) Join J weitergegeben und dort erfolgt die Reservierung und Freischaltung für den individuellen Stream, wie aus dem Stand der Technik vorbekannt. In Schritt 7) meldet sich ein zweiter Stream-Teilnehmer aus dem zweiten Betreibernetzwerk 1, 2, 3 an, indem auch dieser einen Listener (oder Talker) Join J sendet, welcher denjenigen Randknoten 7 erreicht, welcher dessen Betreibernetzwerk 1, 2, 3 mit dem Transportnetzwerk 5 verbindet, also den in FIG 15 unteren Randknoten 7. Von diesem wird wiederum eine Tunnel Join Nachricht TJ herausgegeben, wobei nun eine Tunnel Reservierung nur noch auf der ggf. für den weiteren Stream-Teilnehmer zusätzlich benötigten Teilstrecke des Tunnels 8, 9 im Transportnetzwerk 5 erfolgt. Auch dies ist analog zu dem Stand der Technik für einzelne Streams, da auch dort gilt, dass für den Fall, dass sich ein weiterer Stream-Teilnehmer an einem Stream anmeldet eine Ressourcen-Reservierung und Freischaltung der Weiterleitung nur noch auch der zusätzlich erforderlichen Teilstrecke, konkret an den auf dieser Teilstrecke liegenden Knoten, erforderlich ist.

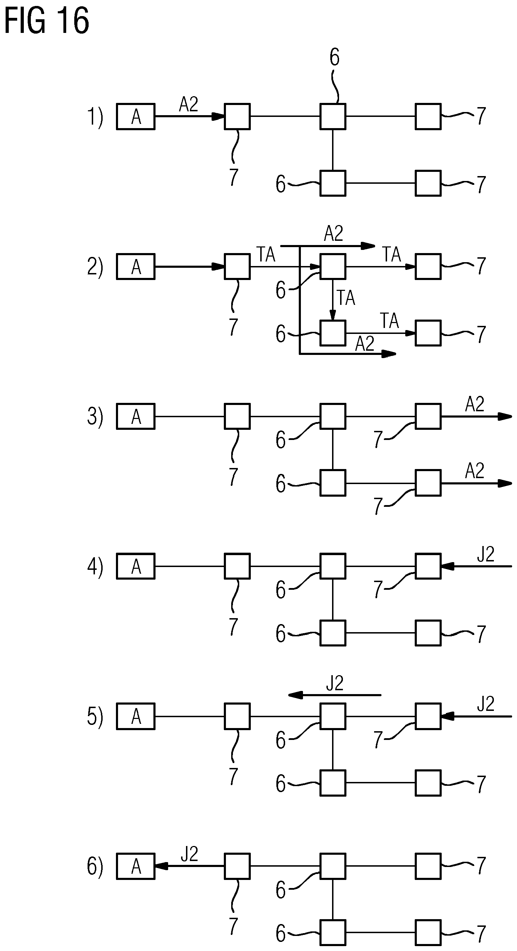

Neben der Möglichkeit, dass ein bereits eingerichteter Tunnel 8, 9 von einem weiteren Stream-Teilnehmer für einen Stream SR A - SR F genutzt werden möchte, kann natürlich, wenn ein Tunnel bereits von einem Stream SR A - SR F genutzt wird, auch ein weiterer Stream SR A - SR F für diesen Tunnel 8, 9 hinzukommen. Ein zugehöriger Ablauf ist schematisch in der FIG 16 in sechs Schritten 1) bis 6) dargestellt. Gemäß Schritt 1) gibt ein Stream-Initiator einen Talker (oder Listener) Advertise A2 für einen weiteren Stream SR A - SR F heraus und dieser wird gemäß Schritt 2) von dem in FIG 16 linken, anfangsseitigen Randknoten 7 zu den beiden in FIG 16 rechten Randknoten 7 getunnelt und es wird ein Tunnel Advertise TA von dem anfangsseitigen bis zu den endseitigen Randknoten 7 gesendet (Schritt 2)). Abhängig von der verwendeten Information im Tunnel Advertise TA kann eine Aktualisierung der insbesondere durch die Registrierung entstandenen Liste 37 (siehe Figuren 12 und 13) mit den im Tunnel 8, 9 enthaltenen Stream IDs erfolgen. Der Advertise A2 für den zweiten Stream SR A - SR F wird in sämtliche Betreibernetzwerke 1, 2, 3, die über das Transportnetzwerk 5 mit dem Betreibernetzwerk 1, 2, 3 des Initiators des zweiten Streams verbunden sind, und dort an die Endgeräte weitergegeben (Schritt 3)). Wenn sich ein Teilnehmer an dem zweiten Stream SR A - SR F anmelden möchte, gibt er einen Listener (oder auch Talker) Join J2 für den zweiten Stream SR A - SR F heraus, wobei die übliche Reservierung und Freischaltung in dem Betreibernetzwerk 1, 2, 3 des Teilnehmers für den zweiten Stream SR A - SR F erfolgt (Schritt 4)). Durch das Transportnetzwerk 5 hingegen wird der Join J2 getunnelt (Schritt 5)) und auf der anderen Seite in das Betreibernetzwerk 1, 2, 3 des Stream-Initiators weitergeleitet, wobei dort wiederum die übliche Reservierung und Freischaltung erfolgt (Schritt 6)). Im Transportnetzwerk 5 wird der bereits reservierte Tunnel 8, 9 für die Reservierung verwendet. Der erste Randknoten 7 in Richtung des oder der Talker überwacht dabei die Verwendung der Ressourcen des Tunnels 8, 9 und verhindert ggf. eine Reservierung analog zum Stand der Technik durch das Hinzufügen der Error Information 38 im Advertise.

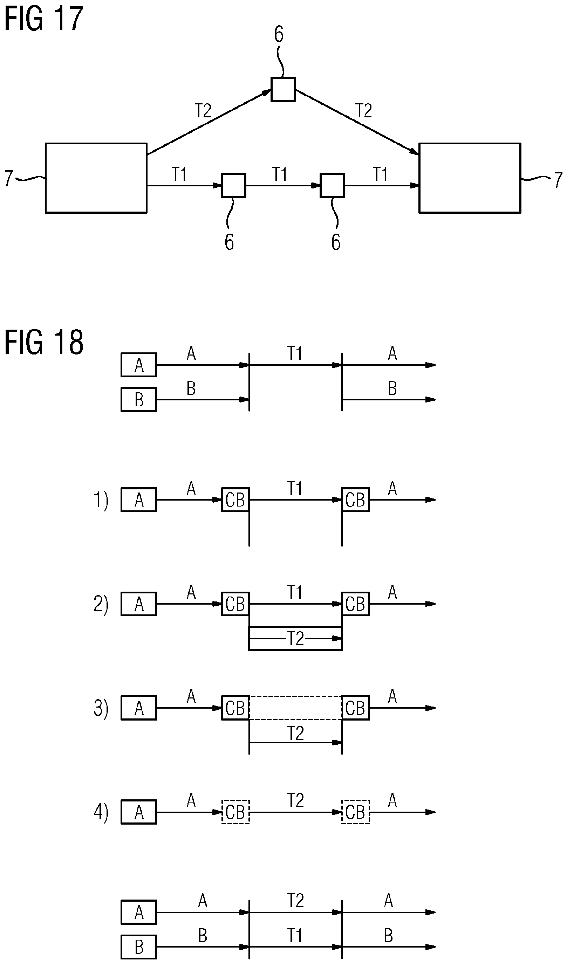

Für eine automatische, nahtlose Rekonfiguration von Stream-Tunneln 8, 9 kann der IEEE 802.1CB, insbesondere IEEE802.1CB-2017, Standard mit dem Titel "Frame Replication and Elimination for Reliability" in Kombination mit der vorliegenden Erfindung genutzt werden. Für den Wechsel eines oder mehrere Streams SR A - SR F von einem ersten durch zwei oder mehr Randknoten 7 begrenzten Tunnel 8, 9 auf einen zweiten insbesondere durch zumindest die gleichen, ggf. weitere Randknoten 7 begrenzten Tunnel 8, 9 im Transportnetzwerk 5, wie in FIG 17 skizziert, kommt der in FIG 18 dargestellte, die vier Schritte 1) bis 4) umfassende Ablauf in Frage.

In FIG 18 oben ist die Ausgangslage dargestellt, gemäß derer zwei Streams A und B einen ersten Tunnel 8, 9 nutzen. Es sei angemerkt, dass in den Figuren 17 und 18 der erste bzw. zweite Tunnel 8, 9 mit T1 bzw. T2 bezeichnet sind. Die Reservierung kann entweder bereits fest konfiguriert sein, oder durch ein Reservierungsprotokoll wie z.B. MSRP erfolgt sein. Für einen Wechsel von Stream A auf einen zweiten Tunnel T2 wird in einem ersten Schritt 1) der CB-Modus gemäß IEEE802.1CB-2017 an den beteiligten Randknoten 7 aktiviert und in Schritt 2) wird eine weitere Tunnelreservierung für den gleichen Stream A hinzugefügt. Dabei gewährleistet CB, dass keine duplizierten Datenframes von Stream A, also Duplikate, von dem Transportnetzwerk 5 in das Betreibernetzwerk 1, 2, 3 weitergeleitet werden. In Schritt 3) wird der Stream A von dem vorherigen, ersten Tunnel T1 entfernt und in Schritt 4) wird der CB Modus für den Stream A wieder deaktiviert. In der FIG 18 unten ist das Resultat der "nahtlosen Überführung" gezeigt. Stream B nutzt - wie zuvor - den ersten und Stream A den zweiten Tunnel.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Datenkommunikation in einem strukturierten Netzwerk, welches wenigstens ein insbesondere industrielles Betreibernetzwerk (1, 2, 3), an das mehrere Sender und/oder Empfänger darstellende Netzwerkteilnehmer angeschlossen sind, und ein einen oder mehrere Kernknoten (6) umfassendes Transportnetzwerk (5), welches das Betreibernetzwerk (1, 2, 3) mit wenigstens einem weiteren insbesondere industriellen Betreibernetzwerk (1, 2, 3), an das mehrere Sender und/oder Empfänger darstellende weitere Netzwerkteilnehmer angeschlossen sind, und/oder mit wenigstens einem einzelnen, einen Sender und/oder Empfänger darstellenden Netzwerkteilnehmer verbindet, wobei das oder jedes Betreibernetzwerk (1, 2, 3) und der oder jeder einzelne Netzwerkteilnehmer über einen Randknoten (7) mit dem Transportnetzwerk (5) verbunden ist,
**dadurch gekennzeichnet, dass**
in dem Transportnetzwerk (5) ein sich zwischen zwei oder mehr Randknoten (7) erstreckender Stream-Tunnel (8, 9) eingerichtet ist oder wird, und zwischen über das Transportnetzwerk (5) verbundenen Netzwerkteilnehmern Datenframes via Stream (SR A - SR F) übertragen werden, wobei durch den Stream-Tunnel (8, 9) Stream-Datenframes (10) weitergeleitet werden, die verschiedenen Streams (SR A - SR F) zugeordnet sind, wobei die Weiterleitung unter Nutzung von Netzwerkressourcen erfolgt, die an einem oder mehreren Kernknoten (6) des Transportnetzwerkes (5) für den Stream-Tunnel (8, 9) reserviert sind oder werden.

2. Verfahren nach Anspruch 1,
**dadurch gekennzeichnet, dass**
in dem Transportnetzwerk (5) zwei oder mehr sich jeweils zwischen zwei oder mehr Randknoten (7) erstreckende Stream-Tunnel (8, 9) eingerichtet sind oder werden, wobei für jeden Stream-Tunnel (8, 9) gilt, dass über diesen verschiedenen Streams (SR A - SR F) zugeordnete Stream-Datenframes (10) weitergeleitet werden, wobei die Weiterleitung unter Nutzung von Netzwerkressourcen erfolgt, die an einem oder mehreren Kernknoten (6) des Transportnetzwerkes (5) für den jeweiligen Stream-Tunnel (8, 9) reserviert sind oder werden.

3. Verfahren nach Anspruch 1 oder 2,
**dadurch gekennzeichnet, dass**
dem oder jedem Stream-Tunnel (8, 9) eine Tunnel-Adresse (18) und/oder Tunnel-ID (33) und/oder Tunnel-VLAN (20) zugeordnet ist, und für die Weiterleitung von verschiedenen Streams (SR A - SR F) zugeordneten Stream-Datenframes (10) über den jeweiligen Stream-Tunnel (8, 9) Netzwerkressourcen genutzt werden, die für die jeweilige Tunnel-Adresse (18) und/oder Tunnel-ID (33) und/oder Tunnel-VLAN (20) reserviert sind oder werden.

4. Verfahren nach einem der vorhergehenden Ansprüche,
**dadurch gekennzeichnet, dass**
Stream-Datenframes, die an einem Randknoten (7) ankommen, und über einen durch diesen Randknoten (7) begrenzten Stream-Tunnel (8, 9) durch das Transportnetzwerk (5) weitergeleitet werden sollen, von dem Randknoten (7) wenigstens einen dem Stream-Tunnel (8, 9) zugeordneten, insbesondere ausschließlich für Stream-Datenframes (10) vorgesehenen Tunnel-Tag und/oder Tunnel-Header (17) hinzugefügt bekommen.

5. Verfahren nach Anspruch 4,
**dadurch gekennzeichnet, dass**
die Weiterleitung der Stream-Datenframes (10) in dem Transportnetzwerk (5) ausschließlich basierend auf dem wenigstens einen Tunnel-Tag und/oder Tunnel-Header (17) erfolgt.

6. Verfahren nach Anspruch 4 oder 5,
**dadurch gekennzeichnet, dass**
der den Stream-Datenframes (10) hinzugefügte, wenigstens eine Tunnel-Tag und/oder Tunnel-Header (17) von wenigstens einem weiteren, insbesondere ein anderes Ende des Stream-Tunnels (8, 9) begrenzenden Randknoten (7) wieder entfernt wird, und die Stream-Datenframes (10) von dem wenigsten einen weiteren Randknoten (7) ohne den wenigstens einen Tunnel-Tag und/oder Tunnel-Header (17) weitergeleitet werden.

7. Verfahren nach einem der vorhergehenden Ansprüche,
**dadurch gekennzeichnet, dass**
für wenigstens einen Stream-Tunnel (8, 9) eine feste Bandbreite in dem Transportnetzwerk (5), insbesondere an beteiligten Kernknoten (6) reserviert ist, und insbesondere ein den Stream-Tunnel (8, 9) bevorzugt anfangsseitig begrenzender Randknoten (7) überwacht, welche Bandbreite momentan genutzt wird und für den Fall, dass die fest vorgegebene Bandbreite erschöpft ist, verhindert, dass weitere Streams (SR A - SR F) den Stream-Tunnel (8, 9) nutzen, insbesondere diesen zugeordnete Stream-Datenframes (10) nicht über das Transportnetzwerk (5) weiterleitet.

8. Verfahren nach einem der vorhergehenden Ansprüche,
**dadurch gekennzeichnet, dass**
für wenigstens einen Stream-Tunnel (8, 9) die von dem Stream-Tunnel (8, 9) genutzte Bandbreite dynamisch angepasst wird, insbesondere in Abhängigkeit von den Streams (SR A - SR F), die diesen Stream-Tunnel (8, 9) momentan nutzen und/oder Streams(SR A - SR F), die diesen Stream-Tunnel (8, 9) noch zusätzlich nutzen wollen.

9. Verfahren nach einem der vorhergehenden Ansprüche,
**dadurch gekennzeichnet, dass**
für wenigstens einen Stream-Tunnel (8, 9) die Reservierung von Netzwerkressourcen an Kernknoten (6) unter Verwendung eines Reservierungsprotokolls abgewickelt wird.

10. Verfahren nach einem der vorhergehenden Ansprüche,
**dadurch gekennzeichnet, dass**
für die Einrichtung eines Streams (SR A - SR F) zwischen zwei oder mehr über das Transportnetzwerk (5) verbundenen Netzwerkteilnehmern von wenigstens einem einen Stream-Initiator darstellenden Netzwerkteilnehmer eine Stream-Ankündigungsnachricht (A) abgesendet und insbesondere im Netzwerk verteilt wird.

11. Verfahren nach Anspruch 10,
**dadurch gekennzeichnet, dass**
das oder jedes Betreibernetzwerk (1, 2, 3) einen oder mehrere Betreiberknoten (4) umfasst, und die Stream-Ankündigungsnachricht (A) nur von Betreiberknoten (4) und/oder Randknoten (7) verarbeitet wird, wobei die Verarbeitung insbesondere das Speichern von in der Stream-Ankündigungsnachricht (A) enthaltenen Informationen umfasst, während die Stream-Ankündigungsnachricht (A) von den Kernknoten (6) ohne Verarbeitung, insbesondere ohne die Speicherung von Informationen aus dieser und/oder ohne eine Veränderung dieser, weitergeleitet wird.

12. Verfahren nach Anspruch 10 oder 11,
**dadurch gekennzeichnet, dass**
von einem Randknoten (7), der eine Stream-Ankündigungsnachricht (A) an einem von dem Transportnetzwerk (5) wegweisenden Port empfängt, in Reaktion auf die Stream-Ankündigungsnachricht (A) eine Tunnel-Ankündigungsnachricht (TA) für einen Stream-Tunnel (8, 9) für den Stream (SR A - SR F) in das Transportnetzwerk (5) gesendet wird, und die Tunnel-Ankündigungsnachricht (TA) bevorzugt von Kernknoten (6) verarbeitet wird, wobei die Verarbeitung insbesondere das Speichern von in der Tunnel-Ankündigungsnachricht (TA) enthaltenen Informationen umfasst.

13. Verfahren nach Anspruch 12,
**dadurch gekennzeichnet, dass**
die Tunnel-Ankündigungsnachricht (TA) eine Tunnel-ID (33) umfasst.

14. Verfahren nach Anspruch 13,
**dadurch gekennzeichnet, dass**
die Tunnel-Ankündigungsnachricht (TA) zusätzlich eine Information über eine akkumulierte Latenz (35) umfasst.

15. Verfahren nach Anspruch 13 oder 14,
**dadurch gekennzeichnet, dass**
die Tunnel-Ankündigungsnachricht (TA) zusätzlich eine Traffic Spezifikation (36) umfasst.

16. Verfahren nach einem der Ansprüche 13 bis 15,
**dadurch gekennzeichnet, dass**
die Tunnel-Ankündigungsnachricht (TA) zusätzlich Tunnel Transport Informationen (34), insbesondere die Angabe wenigstens eines Tunnel-Tags und/oder Tunnel-Headers (17), welcher Stream-Datenframes (10), die über den Stream-Tunnel (8, 9) weitergeleitet werden sollen, hinzugefügt ist oder wird, umfasst.

17. Verfahren nach einem der Ansprüche 13 bis 16,
**dadurch gekennzeichnet, dass**
die Tunnel-Ankündigungsnachricht (TA) zusätzlich die ID (37) wenigstens eines dem Stream-Tunnel (8, 9) zugeordneten Streams (SR A - SR F) und/oder eine Fehlerangabe (38) umfasst.

18. Verfahren nach einem der Ansprüche 10 bis 17,
**dadurch gekennzeichnet, dass**
von einem einen Stream-Teilnehmer darstellenden Netzwerkteilnehmer, der eine von einem einen Stream-Initiator darstellenden Netzwerkteilnehmer gesendete Stream-Ankündigungsnachricht (A) empfangen hat, und an dem angekündigten Stream (SR A - SR F) teilnehmen möchte, eine Stream-Beitrittsnachricht (J) gesendet wird.

19. Verfahren nach Anspruch 18,
**dadurch gekennzeichnet, dass**
das oder jedes Betreibernetzwerk (1, 2, 3) einen oder mehrere Betreiberknoten (4) umfasst, und die Stream-Beitrittsnachricht (J) von Betreiberknoten (4) und/oder Randknoten (7) verarbeitet wird, wobei die Verarbeitung insbesondere das Speichern von in der Stream-Beitrittsnachricht (J) enthaltenen Informationen und/oder ein Verändern der Stream-Beitrittsnachricht (J) umfasst, und die Stream-Beitrittsnachricht (J) von den Kernknoten (6) ohne Verarbeitung, insbesondere ohne die Speicherung von Informationen aus dieser und/oder ohne eine Veränderung dieser, weitergeleitet wird.

20. Verfahren nach Anspruch 18 oder 19,
**dadurch gekennzeichnet, dass**
von einem einen Stream-Tunnel begrenzenden Randknoten (7), der eine Stream-Beitrittsnachricht (J) an einem von dem Transportnetzwerk (5) wegweisenden Port empfängt, in Reaktion auf die Stream-Beitrittsnachricht (J) eine Tunnel-Beitrittsnachricht (TJ) in das Transportnetzwerk (5) gesendet wird, wobei die Tunnel-Beitrittsnachricht (TJ) bevorzugt von Kernknoten (6) verarbeitet wird, wobei die Verarbeitung insbesondere das Speichern von in der Tunnel-Beitrittsnachricht (TJ) enthaltenen Informationen und/oder ein Verändern der Tunnel-Beitrittsnachricht (TJ) umfasst.

21. Verfahren nach einem der vorhergehenden Ansprüche,
**dadurch gekennzeichnet, dass**
dass für wenigstens einen einem Stream-Tunnel (8, 9) zugeordneten, den Stream-Tunnel (8, 9) nutzenden Stream (SR A - SR F) an denjenigen Randknoten (7), die den Stream-Tunnel (8, 9) begrenzen, der CB-Modus, insbesondere gemäß IEEE802.1CB, aktiviert ist bzw. wird, und dieser Stream (SR A - SR F) bevorzugt von diesem Stream-Tunnel (8, 9) auf einen anderen Stream-Tunnel (8, 9) überführt wird.

22. Verfahren nach einem der vorhergehenden Ansprüche,
**dadurch gekennzeichnet, dass**
Stream-Datenframes (10) zwischen einem oder mehreren Feldgeräten und wenigstens einer insbesondere speicherprogrammierbaren Steuerung über wenigstens einen Stream-Tunnel (8, 9) übertragen werden, wobei die Steuerung bevorzugt Software-implementiert ist und an einem von den Endgeräten entfernten Ort, insbesondere in einem von den Feldgeräten entfernten Rechenzentrum ausgeführt wird.

23. Vorrichtung, die zur Durchführung des Verfahrens nach einem der Ansprüche 1 bis 22 ausgebildet und eingerichtet ist.

24. Computerprogramm umfassend Programmcode-Mittel zur Durchführung des Verfahrens nach einem der Ansprüche 1 bis 22.

25. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 22 durchzuführen.
